# EUROPEAN PATENT APPLICATION

(11) **EP 4 783 661 A1**
(43) Date of publication of application: **29.07.2026**
(21) Application number: 23952480.4
(22) Date of filing: 18.09.2023
(51) Int. Cl.: H04W 36/00

(54) **METHOD FOR NON-TERRESTRIAL NETWORK SATELLITE HANDOVER, TERMINAL DEVICE, AND NETWORK DEVICE**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN)
(74) Representative: Fish & Richardson P.C.
(86) International application number: PCT/CN2023/119494
(87) International publication number: WO 2025/059814

(57) **Abstract**

A method for satellite handover of non-terrestrial networks, a terminal device, and a network device are provided, which is helpful for the terminal device to determine retransmission resources for satellite handover. This method is applied to satellite handover from a coverage area of the first satellite network to a coverage area of the second satellite network, and includes: receiving a first handover command, where the first handover command includes first information. The first information is configured for the terminal device to determine a first resource for an uplink transmission to the second satellite network during the satellite handover. The satellite handover adopts a random access channel-less (RACH-less) handover and/or a conditional handover (CHO).

## Description

### TECHNICAL FIELD

The various embodiments described in this document relate in general to the technical field of communication, and more specifically to a method for satellite handover of non-terrestrial networks, a terminal device, and a network device.

### BACKGROUND

In order to improve user experience and reduce a delay when a terminal device switches from a source cell to a target cell, random access channel-less (RACH-less) handover (RACH-less handover) is introduced.

However, in some communication systems, such as non-terrestrial network (NTN) systems, a propagation delay between the terminal device and the network device is relatively large. When performing the RACH-free handover in these communication systems, how the terminal device determines resources for uplink transmission is a technical problem that needs to be solved.

### SUMMARY

The present disclosure provides a method for satellite handover of non-terrestrial networks, a terminal device, and a network device. Hereinafter, various aspects related to embodiments of the present disclosure will be described.

According to a first aspect, embodiments of the disclosure provide a method for satellite handover of non-terrestrial networks, applied to satellite handover from a coverage area of a first satellite network to a coverage area of a second satellite network. The method includes: receiving a first handover command, where the first handover command includes first information, and the first information is configured for the terminal device to determine a first resource for an uplink transmission to the second satellite network during the satellite handover. The satellite handover adopts a random access channel-less (RACH-less) handover and/or a conditional handover (CHO).

According to a second aspect, embodiments of the disclosure provide a method for satellite handover of non-terrestrial networks, applied to satellite handover from a coverage area of a first satellite network to a coverage area of a second satellite network. The method includes: transmitting a first handover request to the second satellite network; and transmitting a first handover command to a terminal device according to a request acknowledgement corresponding to the first handover request, where the first handover command includes first information, and the first information is configured for the terminal device to determine a first resource for an uplink transmission to the second satellite network during the satellite handover. The satellite handover adopts a random access channel-less (RACH-less) handover and/or a conditional handover (CHO).

According to a third aspect, embodiments of the disclosure provide a method for satellite handover of non-terrestrial networks, applied to satellite handover from a coverage area of a first satellite network to a coverage area of a second satellite network. The method includes: receiving a first handover request transmitted by the first satellite network; and transmitting a request acknowledgement corresponding to the first handover request to the first satellite network, where the request acknowledgement is configured to determine a first handover command, the first handover command includes first information, and the first information is configured for the terminal device to determine a first resource for an uplink transmission to the second satellite network during the satellite handover. The satellite handover adopts a random access channel-free (RACH-less) handover and/or a conditional handover (CHO).

According to a fourth aspect, embodiments of the disclosure provide a terminal device, including: a receiving unit configured to receive a first handover command, where the first handover command is configured to instruct the terminal device to perform satellite handover from a coverage area of a first satellite network to a coverage area of a second satellite network. The first handover command includes first information, and the first information is configured for the terminal device to determine a first resource for an uplink transmission to the second satellite network during the satellite handover. The satellite handover adopts a random access channel-less (RACH-less) handover and/or a conditional handover (CHO).

According to a fifth aspect, embodiments of the disclosure provide a network device. The network device is a network device corresponding to a first satellite network, and the network device includes: a first transmitting unit, configured to transmit a first handover request to a second satellite network; and a second transmitting unit, configured to transmit a first handover command to a terminal device according to a request acknowledgement corresponding to the first handover request. The first handover command is configured to instruct the terminal device to perform satellite handover from a coverage area of the first satellite network to a coverage area of a second satellite network. The first handover command includes first information, and the first information is configured for the terminal device to determine a first resource for an uplink transmission to the second satellite network during the satellite handover. The satellite handover adopts a random access channel-less (RACH-less) handover and/or a conditional handover (CHO).

According to a sixth aspect, embodiments of the disclosure provide a network device, and the network device is a network device corresponding to a second satellite network. The network device includes: a receiving unit configured to receive a first handover request transmitted by a first satellite network; and a transmitting unit configured to transmit, to the first satellite network, a request acknowledgement corresponding to the first handover request. The request acknowledgement is configured to determine a first handover command, the first handover command is configured to instruct a terminal device to perform satellite handover from a coverage area of the first satellite network to a coverage area of the second satellite network, and the first handover command includes first information. The first information is configured for the terminal device to determine a first resource for an uplink transmission to the second satellite network during the satellite handover. The satellite handover adopts a random access channel-free (RACH-less) handover and/or a conditional handover (CHO).

According to a seventh aspect, embodiments of the disclosure provide a communication apparatus, including at least one memory for storing programs and at least one processor for invoking the programs in the at least one memory to perform the method described in any of the first aspect to the third aspect.

According to an eighth aspect, embodiments of the disclosure provide an apparatus, including a processor for invoking a program from a memory to perform the method described in any of the first aspect to the third aspect.

According to a ninth aspect, embodiments of the disclosure provide a chip, including a processor for invoking a program from a memory, to enable a device on which the chip is mounted to perform described in any of the first aspect to the third aspect.

According to a tenth aspect, embodiments of the disclosure provide a computer-readable storage medium, having stored thereon a program that causes a computer to perform the method described in any of the first aspect to the third aspect.

According to an eleven aspect, embodiments of the disclosure provide a computer program product, including a program that causes a computer to perform the method described in any of the first aspect to the third aspect.

According to a twelfth aspect, embodiments of the disclosure provide a computer program, causing a computer to perform the method described in any of the first aspect to the third aspect.

In the embodiments of the disclosure, the first handover command includes first information for the terminal device to determine uplink transmission resources. Thus, after receiving the first information, the terminal device can determine the first resource for handover when performing satellite handover from the coverage area of the first satellite network to the coverage area of the second satellite network. With the indication of the first information, the terminal device can perform the uplink transmission to the second satellite network timely without using random access channels, thereby enabling more efficient satellite handover.

### BRIEF DESCRIPTION OF THE DRAWINGS

FIG. 1 is a wireless communication system to which embodiments of the present disclosure are applied.
FIG. 2 is a schematic diagram illustrating an NTN system to which embodiments of the present disclosure are applied.
FIG. 3 is a schematic diagram illustrating another NTN system to which embodiments of the present disclosure are applied.
FIG. 4 is a schematic flow chart of a RACH-less handover according to embodiments of the present disclosure.
FIG. 5 is a schematic flow chart of a method for satellite handover of NTNs according to embodiments of the present disclosure.
FIG. 6 is a schematic diagram of one possible implementation of determining a first resource based on a timer.
FIG. 7 is a schematic diagram of another possible implementation of determining a first resource based on a timer.
FIG. 8 is a schematic flow chart of one possible implementation of the method of FIG. 5.
FIG. 9 is a schematic flow chart of one possible implementation for determining a handover mode.
FIG. 10 is a schematic flow chart of another possible implementation for determining a handover mode.
FIG. 11 is a schematic flow chart of yet another possible implementation for determining a handover mode.
FIG. 12 is a schematic structural diagram of a terminal device according to embodiments of the present disclosure.
FIG. 13 is a schematic structural diagram of a network device according to embodiments of the present disclosure.
FIG. 14 is a schematic structural diagram of a network device according to other embodiments of the present disclosure.
FIG. 15 is a schematic configuration diagram of a communication apparatus according to embodiments of the present disclosure.

### DETAILED DESCRIPTION OF THE EMBODIMENTS

Hereinafter, the technical solutions in the embodiments of the present disclosure will be described with reference to the accompanying drawings in the embodiments of the present disclosure, and it is obvious that the described embodiments are part of the embodiments of the present disclosure, rather than all the embodiments. Regarding the embodiments in the present disclosure, all other embodiments obtained by those skilled in the art without creative effort fall within the scope of protection of the present disclosure.

The embodiments of the present disclosure can be applied to various communication systems. For example, embodiments of the present disclosure can be applied to a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of an NR system, a LTE-based access to unlicensed spectrum (LTE-U) system, an NR-based access to unlicensed spectrum (NR-U) system, a non-terrestrial network (NTN) system, an universal mobile telecommunication system (UMTS), wireless local area networks (WLAN), wireless fidelity (WiFi), or a 5th-generation (5G) system. The embodiments of the present disclosure can also be applied to other communication systems, such as future communication systems. The future communication system may be, for example, a 6th-generation (6G) mobile communication system, a satellite communication system, or the like.

Traditional communication systems support a limited number of connections and are easy to implement. However, with the development of communication technology, a communication system may support not only conventional cellular communication, but also one or more other types of communication. For example, the communication system may support one or more of device-to-device (D2D) communication, machine-to-machine (M2M) communication, machine type communication (MTC), enhanced MTC (eMTC), vehicle-to-vehicle (V2V) communication, vehicle-to-everything (V2X) communication, and the like. The embodiment of the present disclosure may also be applied to a communication system supporting the above-described communication methods.

The communication system in the embodiments of the present disclosure can be applied to a carrier aggregation (CA) scenario, a dual connectivity (DC) scenario, or a standalone (SA) network deployment scenario.

The communication system in the embodiments of the present disclosure may be applied to an unlicensed spectrum. The unlicensed spectrum may also be regarded as shared spectrum. Alternatively, the communication system in the embodiments of the present disclosure may also be applied to a licensed spectrum. The licensed spectrum may also be considered dedicated spectrum.

The embodiments of the present disclosure can be applied to an NTN system. As examples, the NTN system may include a 4th-generation (4G) communication-based NTN system, an NR-based NTN system, an internet of things (IoT)-based NTN system, and a narrow band internet of things (NB-IoT)-based NTN system.

The communication system may include one or more terminal devices. The terminal device mentioned in the embodiments of the present disclosure may also be referred to as a user equipment (UE), an access terminal, a subscriber unit, a subscriber station, a mobile station, a mobile station (MS), a mobile terminal (MT), a remote station, a remote terminal, a mobile device, a user terminal, a terminal, a wireless communication device, a user agent, or a user device, or the like.

In some embodiments, the terminal device may be a station (ST) in a WLAN. In some embodiments, the terminal device may be a cellular phone, a cordless phone, a session initiation protocol (SIP) phone, a wireless local loop (WLL) station, a personal digital assistant (PDA) device, a handheld device with wireless communication capabilities, a computing device, or other processing devices connected to wireless modems, vehicle-mounted devices, wearable devices, terminal devices in next generation communication systems (e.g., NR systems), or terminal devices in future evolved public land mobile networks (PLMN), etc.

In some embodiments, the terminal device may be a device that provides voice and/or data connectivity to a user. For example, the terminal device may be a handheld device or an on-board device having a wireless connection function. As some specific examples, the terminal device may be a mobile phone, a tablet computer (pad), a notebook computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, and the like.

In some embodiments, the terminal device may be deployed on land. For example, the terminal device may be deployed indoors or outdoors. In some embodiments, the terminal device may be deployed on the surface of the water, such as on a ship. In some embodiments, the terminal device may be deployed in the air, such as on aircraft, balloons, and satellites.

In addition to the terminal device, the communication system may further include one or more network devices. The network device in the embodiment of the present disclosure may be a device for communicating with the terminal device, and the network device may also be referred to as an access network device or a radio access network device. The network device may be, for example, a base station. The network device in the embodiments of the present disclosure may refer to a radio access network (RAN) node (or device) that connects the terminal device to the wireless network. The base station may broadly cover, or be substituted for, various names among, a node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multistandard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or the like, or a combination thereof. The base station may also refer to a communication module, a modem, or a chip provided in the apparatus or device. The base station may also be a mobile switching center, a device that undertakes the function of a base station in D2D, V2X, or M2M communication, a network-side device in a 6G network, a device that undertakes the function of a base station in a future communication system, or the like. The base stations may support networks of the same or different access technologies. There is no restriction on the specific technology and the specific equipment adopted by the network device in the embodiments of the present disclosure.

The base station may be a fixed base station or a mobile base station. For example, a helicopter or unmanned aerial vehicle may be configured to act as a mobile base station, and one or more cells may change according to the location of the mobile base station. In other examples, a helicopter or unmanned aerial vehicle may be configured to be used as a device to communicate with another base station.

In some deployments, the network device in the embodiment of the present disclosure may refer to a CU or a DU, or the network device includes a CU and a DU. The gNB may also include an AAU.

By way of example and not limitation, in embodiments of the present disclosure, the network device may have mobile characteristics, for example, the network device may be a mobile device. In some embodiments of the present disclosure, the network device may be a satellite or a balloon station. In some embodiments of the present disclosure, the network device may also be a base station disposed on land, water, or the like.

In the embodiments of the present disclosure, the network device may provide services for the cell. The terminal device communicates with the network device through transmission resources (e.g., frequency domain resources, or spectrum resources) used by the cell. The cell may be a cell corresponding to the network device (e.g., base station). The cell can belong to a macro base station or to a base station corresponding to a small cell. The small cell referred to herein can include: a metro cell, a micro cell, a pico cell, a femto cell, or the like. The small cell has the characteristics of small coverage and low transmission power, and are suitable for providing high-speed data transmission services.

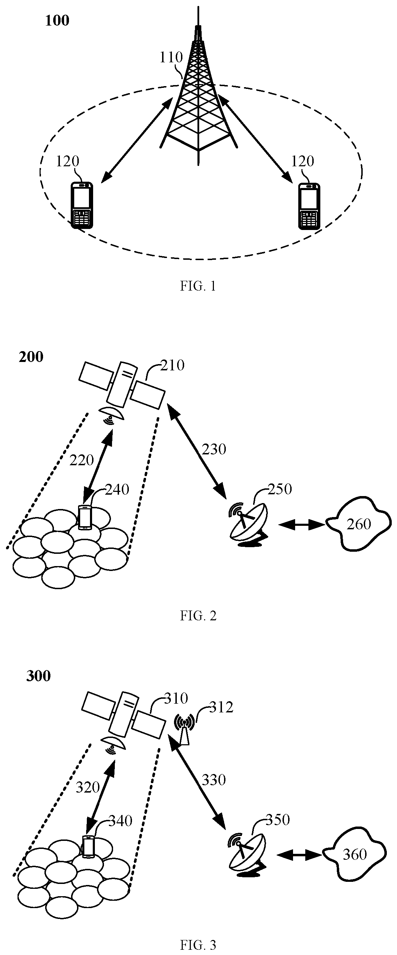

Exemplarily, FIG. 1 is a schematic architecture diagram of a communication system provided in embodiments of the present disclosure. As shown in FIG. 1, the communication system 100 may include a network device 110, which may be a device that communicates with a terminal device 120 (or referred to as a communication terminal, or a terminal). The network device 110 may provide communication coverage for a particular geographic region and may communicate with terminal devices located within the coverage area.

FIG. 1 exemplarily illustrates one network device and two terminal devices. In some embodiments of the present disclosure, the communication system 100 may include a plurality of network devices and another number of terminal devices may be included within the coverage range of each network device, which is not limited in the embodiments of the present disclosure.

By way of example, FIG. 2 is a schematic diagram of an architecture of the NTN system mentioned above. The NTN system 200 shown in FIG. 2 uses a satellite 210 as an aerial platform. As shown in FIG. 2, the satellite radio access network includes the satellite 210, a serving link 220, a feeder link 230, a terminal device 240, a gateway (GW) 250, and a network 260 including a base station and a core network.

The satellite 210 is a spacecraft based on a space platform. The serving link 220 refers to a link between the satellite 210 and the terminal device 240. The feeder link 230 refers to a link between the gateway 250 and the satellite 210. The earth-based gateway 250 connects the satellite 210 to a base station or core network, depending on the choice of architecture.

The NTN architecture shown in FIG. 2 is an elbow/bent pipe transponder architecture. In this architecture, the base station is located on the earth behind the gateway 250, and the satellite 210 acts as a relay. The satellite 210 operates as a repeater that forwards signals on the feeder link 230 to the serving link 220 or forwards signals on the serving link 220 to the feeder link 230. In other words, the satellite 210 does not have the function of a base station, and communication between the terminal device 240 and the base station in the network 260 needs to be relayed through the satellite 210.

By way of example, FIG. 3 is a schematic diagram of another architecture of an NTN system. As shown in FIG. 3, a satellite radio access network 300 includes a satellite 310, a serving link 320, a feeder link 330, a terminal device 340, a gateway 350, and a network 360. Different from FIG. 2, there is a base station 312 on the satellite 310. The network 360 behind the gateway 350 includes only the core network.

The NTN architecture shown in FIG. 3 is a regenerative transponder architecture. In this architecture, the satellite 310 has the base station 312 that may be directly connected via a link to an earth-based core network. The satellite 310 has the function of the base station, and the terminal device 340 can directly communicate with the satellite 310. Thus, the satellite 310 may be referred to as a network device.

In the communication system of the architecture shown in FIGS. 2 and 3, a plurality of network devices may be included, and another number of terminal devices may be included within the coverage range of each of the plurality of network devices, which is not limited in the embodiment of the present disclosure.

In the embodiments of the present disclosure, the communication system shown in FIGS. 1 to 3 may further include other network entities, such as a mobility management entity (MME), an access and mobility management function (AMF), and the like, which is not limited in the embodiments of the present disclosure.

It shall be understood that a device having a communication function in the network/system in the embodiments of the present disclosure may be referred to as a communication device. Taking the communication system 100 shown in FIG. 1 as an example, the communication device may include at least one network device 110 and a plurality of terminal devices 120 that have a communication function. The network device 110 and the terminal device 120 may be specific devices described above, which will not be repeated here. The communication device may further include other devices in the communication system 100, e.g., other network entities, such as a network controller and a mobility management entity, which are not limited in the embodiments of the present disclosure.

In order to facilitate understanding, some related technical knowledge related to the embodiments of the present disclosure will be introduced first. The following related technologies can be arbitrarily combined with the technical solutions of the embodiments of the present disclosure as optional solutions, which all belong to the scope of protection of the embodiments of the present disclosure. Embodiments of the present disclosure include at least some of the following.

### NTN system

With the development of communication technologies, communication systems, such as 5G, demonstrate significant market potential in integrating satellite and terrestrial network infrastructure. For example, the 5G standard has incorporated NTN, which includes the satellite segment, into the recognized 5G connection infrastructure system of the 3rd generation partnership project (3GPP).

NTN refers to a network or network segment that uses radio frequency (RF) resources on platforms of satellites or unmanned aerial systems (UAS). Taking satellites as an example, communication satellites are divided, according to different orbital altitudes, into low earth orbit (LEO) satellites, medium earth orbit (MEO) satellites, geostationary earth orbit (GEO) satellites, high elliptical orbit (HEO) satellites, and the like. The LEO is an Earth-centered orbit with an altitude of 2000 km or less, or at least 11.25 cycles/periods per day, and an eccentricity less than 0.25. Most artificial objects in outer space are located in LEO. LEO satellites orbit the Earth at high speed (mobility), but in predictable or determined orbits.

Satellites with different orbital altitudes have different orbital periods.

LEO: the typical altitude ranges from 250 km to 1500 km, and the orbital period ranges from 90 minutes to 120 minutes.

MEO: the typical altitude ranges from 5000 km to 25000 km, and the orbital period km to 3 hours to 15 hours.

GEO: the altitude is approximately 35,786 km and the orbital period is 24 hours.

As can be seen from FIGS. 2 and 3 above which take satellites as examples, a typical scenario in which a terminal device accesses an NTN system involves an NTN transparent payload or an NTN regenerative payload. The bent pipe transponder architecture shown in FIG. 2 corresponds to the NTN transparent payload, and the regenerative transponder architecture shown in FIG. 3 corresponds to the NTN regenerative payload.

In the NTN system, a propagation delay between the terminal device and the network device mainly depends on the altitude of the spaceborne or airborne platform and the type of payload in the NTN. Compared with terrestrial network (TN), the propagation delay between the terminal device and the network device in the NTN system is much longer. For example, in the cellular network used by traditional NR, the propagation delay of the terrestrial mobile system is typically less than 1 millisecond, while the propagation delay of the NTN system ranges from a few milliseconds to hundreds of milliseconds.

The NTN system has strong mobility, and satellites and other aerial platforms have a relatively large coverage area. The terminal device needs to perform cell handover in time to maintain communication stability. For the sake of brevity, satellites will be used as examples for illustration later.

### RACH-less handover

When synchronizing is required between a source cell, a target cell, and the terminal device, a random access channel-free (RACH-free) handover (HO) solution can be introduced to reduce the handover delay and improve the user experience. The RACH-free handover is also referred to as a random access channel-free (RACH-less) handover. In a synchronized network, it can be considered that subframe boundaries between the source cell and the target cell are aligned. Therefore, the terminal device can switch from the source cell to the target cell at a time agreed by three parties without requiring a random access procedure. For example, when synchronizing is required between the source cell, the target cell, and the terminal device, the terminal device can switch from the source cell to the target cell at a system frame number (SFN) agreed by the three parties without requiring random access.

One purpose of the RACH process in the handover procedure is to obtain a timing advance (TA) of the target cell. Under the condition of RACH handover, the terminal device can acquire the TA in the target cell through the RACH process. In the absence of the RACH process, when the source cell and the target cell are time-synchronized, the terminal device can obtain the TA in the target cell without an explicit TA command.

Another purpose of the RACH process during handover is to obtain an uplink (UL) grant transmission. In the case where there is no RACH process in the target cell, an uplink grant needs to be allocated in the target cell. In some embodiments, a pre-allocation grant in a RACH-less handover command is supported for an initial uplink transmission in a RACH-less handover. That is, the target cell may perform pre-allocation through an uplink grant (UL-grant) in the handover command. The pre-allocated uplink grant may remain valid for a period of time, which is started from the time when the terminal device achieves synchronization with the target cell. For example, when the NR terrestrial network performs RACH-less handover, the propagation delay between the terminal device and the network device is relatively low. According to delay information of the propagation between the terminal device and the network device, the target cell may appropriately configure a time-domain position of uplink resources in the handover command, so that the terminal device can transmit a "RRCReconfigurationComplete" message (i.e., a handover completion message) when accessing the target cell.

### Configured scheduling (CS) mechanism

In a 3GPP wireless network, transmission of a physical uplink shared channel (PUSCH) can be dynamically scheduled using an uplink grant in downlink control information (DCI). Exemplarily, the network may be configured using DCI format 0_0 or DCI format 0_1. Exemplarily, in a scenario where there is a random access procedure (e.g., in a scenario of a random access response (RAR)), the network may be configured using an UL grant response message in random access. Exemplarily, the transmission of the PUSCH may be configured by a semi-statically configured UL license configured grant (CG).

CG refers to a semi-persistent grant of radio resources, where transmissions during CG occasions do not require dynamic scheduling of the radio resources. Therefore, the CG transmission may also be referred to as grant-free transmission or a resource-request-free data transmission. The CG transmission includes transmission of two types: transmission of type 1 (type1) and transmission of type 2 (type2). Type 1 and type 2 of the CG transmission are distinguished according to the field "rrc-ConfiguredUplinkGrant" in information element (IE) "ConfiguredGrantConfig". For example, in transmission of type 1, the network side may configure time-frequency resources (provided by "rrc-ConfiguredUplinkGrant"), and the terminal device can directly perform transmission without waiting for the DCI for activation. For another example, in transmission of type 2, since there is no time-frequency resource provided by "rrc-ConfiguredUplinkGrant", after receiving ConfiguredGrantConfig (which does not include rrc-ConfiguredUplinkGrant), the terminal device needs to receive a limited DCI for activation and determine an uplink grant based on the DCI information before performing transmission. The DCI for activation may be scrambled with a CS-radio network temporary identifier (CS-RNTI).

Once configuration for the CG transmission is activated, the terminal device will keep performing uplink transmissions according to the cycle/period (unless the terminal device is in an inactive state). Exemplarily, the transmission period of the uplink configured grant is at least 2 symbols. It is assumed that a subcarrier spacing is 15 KHz, 1 slot = 14 symbols, if the transmission period of the configured grant is configured to be 2 symbols, the terminal device will perform uplink transmission seven times within 1 slot. For example, when the period of the uplink configured grant is configured to be 14 symbols, the terminal device performs uplink transmission in each uplink slot.

Compared with the CG transmission, when dynamically allocating uplink resources, the network has to perform scheduling according to the DCI content every time. Therefore, configured grant transmission can save an air interface transmission time for the terminal device to transmit a scheduling request (SR) and a buffer status report (BSR), and for the NTN network to perform resource indication through uplink DCI.

Specifically, the field "rrc-ConfiguredUplinkGrant" is configured to provide uplink grant for transmission of type 1 of CG transmission, and if this item is absent/missing, it indicates that the CG transmission adopts transmission of type 2. The information element "ConfiguredGrantConfig" is configured to configure the uplink transmissions of type 1 and type 2. As can be seen from the foregoing, the uplink transmissions of type 1 and type 2 do not require DCI dynamic scheduling. In other words, uplink grant of transmission of type 1 is configured by a radio resource control (RRC) parameter ("rrc-ConfiguredUplinkGrant"), and uplink grant of transmission of type 2 is activated by receiving the DCI scrambled with the CS-RNTI before transmission.

During handover of the terminal device, a CS mechanism of downlink (DL) is called semi-persistent scheduling (SPS), and the CS mechanism of uplink is called CG.

The downlink configurated scheduling (CS/SPS) procedure refers to that the NTN network configures all parameters required for scheduling of the physical downlink shared channel (PDSCH) by transmitting an RRC message. The RRC message is, for example, an RRC setup or RRC reconfiguration message. The terminal device monitors the physical downlink control channel (PDCCH) to receive the DCI with the CS-RNTI transmitted by the target NTN. The terminal device may determine parameters related to the PDSCH transmission according to the DCI information.

The uplink configurated scheduling procedure includes processes of type 1 and type 2 of the CG transmission. For process of type 1: the NTN network configures all parameters required for scheduling of the PUSCH by transmitting an RRC message, and the terminal device can transmit the PUSCH without any specific triggering (e.g., DCI triggering) of the physical layer. In this case, the terminal device also monitors the PDCCH to determine whether the target NTN transmits other types of DCI. For process of type 2: the NTN network configures all parameters required for scheduling of the PUSCH by transmitting an RRC message. When the NTN wants to start authorizing/granting (scheduling) the PUSCH, the NTN may transmit a DCI masked with the CS-RNTI. Once the terminal device processes the DCI with the CS-RNTI, the terminal device can transmit the PUSCH according to the scheduling in the RRC. The resources of the PUSCH may be dynamically scheduled by DCI 0_0/0_1/0_2.

In the NTN system, as the satellites move, the terminal device needs to frequently perform satellite handover from a source NTN satellite (NTN1) to a target NTN satellite (NTN2). Compared to cellular networks used by some communication systems (e.g., NR), in the NTN, the propagation delay between the terminal device and the satellite is larger, and the propagation delay of the air interface for the part where the terminal device correctly receives the handover command is larger. Introducing the RACH-less handover in the NTN system can effectively reduce the interaction between the terminal device and the network device, thus improving handover efficiency.

As described above, for an initial uplink transmission in the RACH-less handover, pre-allocation grant in the RACH-less handover command needs to be supported. In the NTN system, the RACH-less handover of the NTN can be supported regardless of whether handover is performed within satellites with the same feeder link or within satellites with different feeder links. The satellites with the same feeder link refer to satellites having a same gateway or network device (e.g., gNB). After introducing the RACH-less handover in the NTN, the interaction between the terminal device and the target NTN in the handover procedure is reduced, enabling the terminal device to quickly access the target network. For example, the terminal device does not need to perform a random access procedure, but directly establishes communication with the target network according to resources preconfigured by the target NTN.

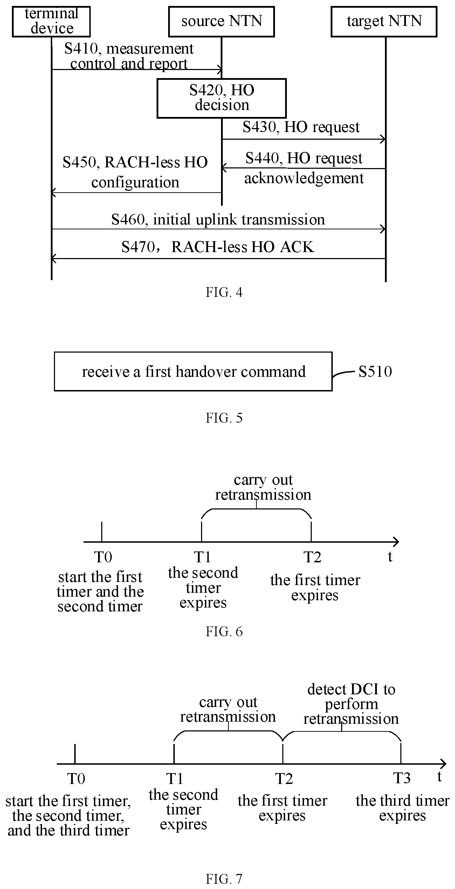

In order to facilitate understanding, a specific flow for the RACH-less handover in the NTN will be illustrated below with reference to FIG. 4. FIG. 4 illustrates interaction between the terminal device, the source NTN, and the target NTN.

Referring to FIG. 4, at S410, the terminal device transmits a measurement control and report to the source NTN. The terminal device reports the measurement report to a cell of the source NTN.

At S420, the source NTN makes a handover decision (HO decision) to determine the target NTN.

At S430, the source NTN transmits a handover request (HO request) to the target NTN.

At S440, the target NTN transmits a HO request acknowledgement (ACK) to the source NTN.

At S450, the source NTN transmits a handover command including a RACH-less HO configuration to the terminal device. The terminal device receives a RACH-less handover command from the source NTN. The handover command may include a pre-allocated grant, a beam index for access associated with a synchronization signal block (SSB), which can also be expressed as a synchronization signal and physical broadcast channel signal block (SS/PBCH block), and resource reservation. After receiving the handover command, the terminal device starts a timer related to the handover.

The terminal device starts the timer T304 when starting the handover. During the handover, once the timer T304 expires, the terminal device initiates an RRC connection reestablishment procedure to the target NTN.

During performing of downlink and uplink synchronization, the terminal device starts a timer T430. As can be seen from the above, the source NTN and the terminal devices on the earth may move relative to each other, so auxiliary information (NTN-config) of the source NTN may involve a validity problem. The timer T430 is configured to ensure that the terminal device can continuously obtain the valid auxiliary information of the source NTN. For example, with aid of the timer T430, the terminal device can be controlled to obtain the auxiliary information that is always valid in the system information block (SIB) 19, so as to ensure that the auxiliary information of the source NTN obtained by the terminal device before the handover is completed is valid.

The auxiliary information of the source NTN may include satellite ephemeris and common TA parameters. For the source NTN, the network side can broadcast information of the ephemeris and the common TA parameters. For example, satellite auxiliary information for NTN access may be included in the SIB 19. Before connecting to the target NTN, the terminal device has a valid global navigation satellite system (GNSS) position as well as the satellite ephemeris and the common TA parameters.

At S460, the terminal device transmits an initial uplink transmission. The initial uplink transmission is transmitted through an available uplink grant. The initial uplink transmission includes transmission of a message "RRCReconfigurationComplete". The uplink grant may correspond to an RRC layer, a media access control (MAC) layer, and a physical (PHY) layer.

At S470, the terminal device receives an acknowledgement (RACH-less HO ACK) of the target NTN, thereby completing the RACH-less handover. When receiving information indicating the handover completion, the terminal device stops the timer T304 based on RRC signaling.

The specific flow of performing RACH-free handover in the NTN is described above with reference to FIG. 4, and the handover command transmitted by the source NTN at S450 includes uplink resources preconfigured by the target NTN for the terminal device.

However, due to the large propagation delay of the NTN system, the terminal device may miss the configured uplink resource during accessing the target NTN, resulting in failure of handover and access. For example, for the delay of the handover command from the target NTN to the terminal device, retransmission at the radio link control (RLC) layer or hybrid automatic repeat request (HARQ) retransmission may also be experienced when the source NTN forwards the handover command, which increases the propagation delay of the air interface for the part of the terminal device, thereby leading to unsuccessful access. Therefore, when the RACH-less handover is introduced in the NTN scenario, how the target NTN reserves and pre-configures uplink resources in the RACH-less handover command to improve the success rate of handover and access of the terminal device is a technical problem to be solved.

Furthermore, due to the large propagation delay, the initial uplink transmission of the terminal device may fail, and retransmission may be required. For example, when the terminal device does not receive feedback information from the target NTN, the terminal device may need to carry out retransmission of the PUSCH. In this case, the terminal device needs to consider whether to carry out retransmission and what resources to use for retransmission. The target NTN also needs to consider whether the pre-allocated grant configures uplink transmission resources for retransmission.

Therefore, in RACH-less satellite handover or other satellite handover without random access channels, how to determine the uplink transmission resources by the terminal device is a technical problem that needs to be solved.

Based on this, embodiments of the present disclosure provide a method for satellite handover of NTNs. By this method, the terminal device can determine the uplink transmission resources for RACH-less handover and/or conditional handover (CHO), so as to facilitate determination of time-frequency resources for whether to perform uplink transmission in the absence of random access channels or determined resources, thereby effectively performing satellite handover.

In order to facilitate understanding, the method provided in the embodiments of the present disclosure will be described in detail below with reference to FIG. 5. The method shown in FIG. 5 is performed by the terminal device and may also be applied to interaction between the terminal device, the first satellite network, and the second satellite network. The method is applied to satellite handover from a coverage area of the first satellite network to a coverage area of the second satellite network.

The terminal device is any one of the above-described terminal devices. In some embodiments, the terminal device is a communication device served by satellites in an NTN system. In some embodiments, the terminal device is a communication device having a low service/traffic transmission rate.

The first satellite network and the second satellite network are NTN networks integrating aerial platforms such as ground facilities and satellites. As described above, aerial platforms such as satellites in the first satellite network and the second satellite network may provide services as network devices or may serve as relays. Taking satellites as an example, network devices corresponding to the first satellite network and the second satellite network may be satellites or ground base stations. For brevity, a satellite corresponding to the first satellite network may be referred to as a first satellite, and a satellite corresponding to the second satellite network may be referred to as a second satellite. A network device corresponding to the first satellite network may be referred to as a first network device, and a network device corresponding to the second satellite network may be referred to as a second network device.

The first satellite network is an NTN network providing services to the terminal device at a current time. The first satellite network may also be referred to as a source NTN or a source satellite network. In some embodiments, the first satellite network provides services to terminal devices within a coverage area of the first satellite network through the network device corresponding to the first satellite network.

The network device corresponding to the first satellite network is a communication device that provides services to the terminal device at the current time. In some embodiments, the network device may be a device that moves relative to the terminal device. For example, the first network device may be a base station on a satellite that serves the terminal device. As another example, the first network device may be a base station installed on a low-altitude aircraft. In some embodiments, the network device may be a device that is relatively stationary to the terminal device or the earth. For example, when a satellite in the first satellite network is used as a relay, the first network device may be a base station on the ground that communicates with the satellite through a gateway.

The coverage area of the first satellite network is an area in which the first satellite network provides communication services. In some scenarios, the coverage area of the first satellite network may also be referred to as a source cell. In some embodiments, the coverage area of the first satellite network may include one or more terrestrial network cells.

The second satellite network is an NTN network serving the terminal device after the first satellite network. The second satellite network may also be referred to as a target NTN or a target satellite network. In some embodiments, the second satellite network provides services to the terminal devices within the coverage area of the second satellite network through a network device corresponding to the second satellite network. In some embodiments, the first satellite network may determine a plurality of satellite networks that can provide services for the terminal device according to a satellite motion trajectory and/or ephemeris information, and determine a second satellite network from the plurality of satellite networks. In some embodiments, the terminal device may determine the second satellite network among the plurality of candidates (the plurality of satellite networks) through signal measurements.

The network device corresponding to the second satellite network is a next communication device to provide services to the terminal device. In some embodiments, the second network device may be a device that moves relatively to the terminal device, or may be a device that is relatively stationary to the terminal device or relatively stationary to the earth, which will not be described herein.

The coverage area of the second satellite network is an area where the second satellite network provides communication services. In some scenarios, the coverage area of the second satellite network may also be referred to as a target cell. In some embodiments, the coverage area of the second satellite network may include one or more terrestrial network cells.

The satellite handover may be handover of satellites corresponding to the region where the terminal device is located. Exemplarily, the satellite handover may be a cell handover. Exemplarily, a physical cell identifier of the coverage area in the satellite handover does not change.

Referring to FIG. 5, at S510, the terminal device receives a first handover command.

The first handover command received by the terminal device is from the first satellite network. That is, the first satellite network currently serving the terminal device instructs the terminal device to perform handover. In some embodiments, the network device corresponding to the first satellite network transmits the first handover command to the terminal device.

In some embodiments, before the terminal device performs satellite handover, the network device corresponding to the first satellite network may transmit a first handover request to the network device corresponding to the second satellite network. The second satellite network feeds back a request acknowledgement corresponding to the first handover request according to the first handover request. The first satellite network may transmit the first handover command in operations at S510 to the terminal device according to the request acknowledgement.

The first handover command is configured to instruct the terminal device to perform satellite handover from the coverage area of the first satellite network to the coverage area of the second satellite network. In some embodiments, due to the movement of the satellite, the region in which the terminal device is located changes from the coverage area of the first satellite network (first satellite network coverage area) to the coverage area of the second satellite network (second satellite network coverage area), such that handover needs to be performed. In some embodiments, due to movement of the terminal device or edge communication, the region in which the terminal device is located changes from the coverage area of the first satellite network to the coverage area of the second satellite network, such that handover needs to be performed.

The first handover command may be a satellite handover command in a plurality of ways. That is, the satellite handover may adopt one of a plurality of handover modes. The plurality of handover modes may include the above-described RACH-less handover, or include the conditional handover (CHO) that needs to satisfy certain conditions, or a combination of the RACH-less handover and the CHO. The handover mode of the combination of the RACH-less handover and the CHO includes the RACH-less handover and the CHO.

In some embodiments, the satellite handover adopts the RACH-less handover. When the terminal device switches to the coverage area of the second satellite network, the terminal device does not use the random access channel to access the second satellite network.

In some embodiments, the satellite handover adopts the CHO. The terminal device may store the first handover command, and perform handover from the coverage area of the first satellite network to the coverage area of the second satellite network when a condition for the first handover command is satisfied.

In some embodiments, the satellite handover is a handover in which the RACH-less handover is combined with the CHO. As one example, configuration information related to the RACH-less handover may be a trigger condition of the CHO. As one example, CHO may also be used for triggering of the RACH-less handover. Specific description will be made later with reference to a method of decision on the handover modes.

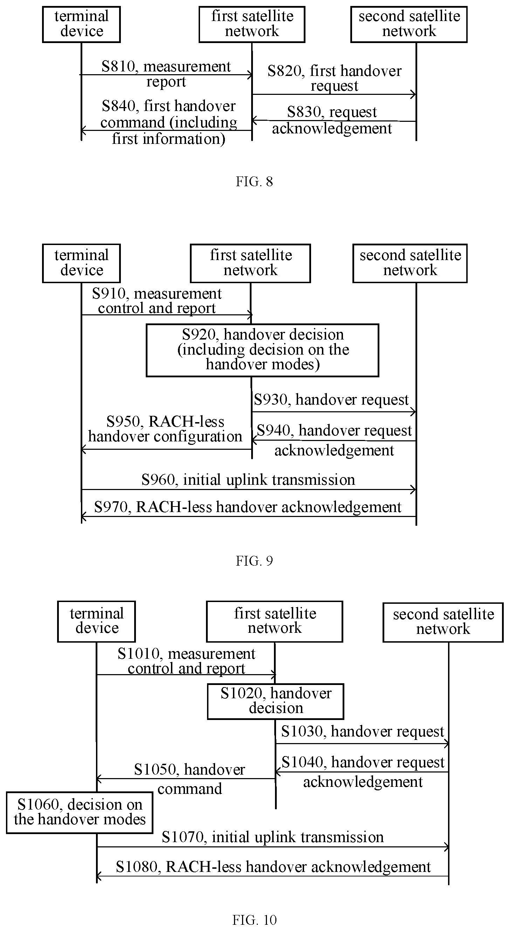

In some embodiments, when there are a plurality of handover modes, the terminal device or the first satellite network or the second satellite network needs to determine a selected handover mode through decision, and the method of decision on the plurality of handover modes will be illustrated later with reference to FIGS. 9 to 11.

The first handover command includes first information. The first information is configured for the terminal device to determine a first resource for an uplink transmission to the second satellite network during the satellite handover. As described above, since the terminal device may not perform handover based on the RACH, the terminal device needs to determine resources for an initial uplink transmission. Furthermore, in a case where the initial uplink transmission of the terminal device fails, the terminal device may also need to perform uplink retransmission in order to perform satellite handover more efficiently.

In some embodiments, the uplink transmission during the satellite handover may include one or more uplink transmissions made by the terminal device to the second satellite network. Exemplarily, the uplink transmission may include the initial uplink transmission by the terminal device to the second satellite network. Exemplarily, the uplink transmission may include one or more uplink retransmissions by the terminal device.

In some embodiments, the uplink retransmission is used for retransmission of the initial uplink transmission or other uplink transmissions during the satellite handover by the terminal device under various circumstances. Exemplarily, the uplink retransmission may be an uplink transmission in the case where the terminal device does not receive an access acknowledgement. For example, the uplink retransmission may be an uplink transmission in the case where the terminal device does not receive feedback regarding the initial uplink transmission. For example, when the uplink retransmission is an autonomous retransmission, the terminal device may perform multiple retransmissions according to preconfigured parameters. For example, the uplink retransmission may be a retransmission in the case where the terminal device fails to handover.

For example, the uplink retransmission may be a retransmission of a shared channel or a retransmission of a control channel, which is not limited herein. For example, the uplink retransmission may be a retransmission of the PUSCH.

The uplink retransmission may be a HARQ retransmission or a retransmission at the RLC layer, which is not limited here.

In some embodiments, the uplink retransmission is an uplink HARQ retransmission, and the uplink HARQ-mode can be a HARQ mode configured to set each HARQ process identity (ID). The HARQ-mode may include a mode A and a mode B. HARQ mode A represents a case where HARQ feedback is enabled, and HARQ mode B represents a case where HARQ feedback is disabled.

Exemplarily, the first/leftmost bit in the parameter corresponding to the uplink HARQ-mode corresponds to HARQ process ID 0, and a next bit of the first/leftmost bit corresponds to HARQ process ID 1, and so on. Bits corresponding to the HARQ process ID with the unconfigured mode will be ignored. Here, when the bit is set to 1, it represents that the HARQ mode is the mode A, and when the bit is set to 0, it represents that the HARQ mode is the mode B. This parameter field may act on signalling radio bearer (SRB) and data radio bearer (DRB).

The first resource may include a pre-configured resource and/or a dynamically scheduled resource for handover. In some embodiments, the first resource includes a plurality of time-frequency resources configured or scheduled by the second satellite network for the satellite handover. For example, the first resource may be a pre-configured resource for the satellite handover. The pre-configured resource may also be referred to as a reserved resource. As another example, the first resource may be a dynamically scheduled resource for the satellite handover. As another example, the first resource may include the pre-configured resource and the dynamically scheduled resource.

In some embodiments, the first resource includes a resource for the initial uplink transmission and/or an uplink transmission resource for the uplink retransmission. For example, in the RACH-less handover, the terminal device may determine resources for the initial uplink transmission according to the first information. For example, in a case where the initial uplink transmission fails, the terminal device may further determine whether to perform the uplink retransmission and resources for the uplink retransmission according to the first information.

In some embodiments, the first resource configured for the initial uplink transmission may include some of or all the time-frequency resources in the pre-configured resources, or may include some of or all the resources in the dynamically scheduled resources. That is, the pre-configured or dynamically scheduled resources of the second satellite network need to meet the requirements of the initial uplink transmission of the terminal device.

In some embodiments, the first resource for the uplink retransmission may include at least a portion of the time-frequency resources of the pre-configured resources for the handover. For example, when the satellite handover adopts the RACH-less handover, the second satellite network needs to indicate a pre-allocated uplink grant to the terminal device. The uplink grant is configured for the terminal device to transmit the initial uplink transmission.

For example, when the second satellite network pre-configures resources, the second satellite network may configure corresponding reserved resources for uplink retransmission. That is, the pre-allocated grant by the second satellite network may be configured for the terminal device to perform the initial uplink transmission and the uplink retransmission. In such a scenario, the pre-allocated grant may include pre-configured resources for the uplink retransmission, and the terminal device may perform retransmission without network scheduling.

Exemplarily, when the pre-configured resources are configured for HARQ retransmission, the HARQ process configuration is similar to the configured grant. In a preconfigured grant, the HARQ process ID depends on a pre-allocated grant occasion. Optionally, when the pre-allocated uplink grant is mainly configured to transmit a RRC reconfiguration completion message, the second satellite network may ensure that the generated HARQ process ID belongs to the same HARQ mode as the subsequent transmission by defining the HARQ process. For example, if the pre-allocated UL grant and the uplink HARQ mode in the handover procedure are configured, it can be easily defined that the HARQ process belongs to the HARQ mode A or the HARQ mode B. As another example, regardless of the pre-allocated grant occasion, if the uplink HARQ mode is configured, the HARQ process for the pre-allocated UL grant belongs to the HARQ mode A.

In some embodiments, the first resource for the uplink retransmission includes the dynamically scheduled resource for the satellite handover. The dynamically scheduled resource is a time-frequency resource that the second satellite network adjusts or schedules in real time according to a communication situation. Exemplarily, the dynamically scheduled resource can have their resource configurations indicated through DCI. The terminal device may obtain the uplink grant by monitoring the PDCCH of the second satellite network.

For example, when the second satellite network does not receive the initial uplink transmission within a pre-allocated grant time, the second satellite network may indicate the dynamic grant to the terminal device by transmitting the DCI.

For example, in order to obtain the uplink grant, the terminal device may need to perform beam selection. Through the beam selection, the terminal device may determine one or more beams to monitor the PDCCH.

Optionally, the terminal device and the network (NW) side may respectively select the beam. For example, during DL synchronization between the terminal device and the second satellite network, the terminal device may determine an appropriate SSB according to the signal quality, and monitor the PDCCH of the target cell using one or more beams corresponding to the SSB. For the network side, after receiving a beam measurement result forwarded by the first satellite network, the second satellite network may determine one or more best beams for the cell to transmit the dynamic grant.

Optionally, the network side selects a beam and transmits a signal to the terminal device. The second satellite network determines one or more beams according to the beam measurement result forwarded by the first satellite network, and indicates an index of each of the selected one or more beams to the terminal device in the first handover command. If no beam indication is provided in the first handover command, the second satellite network may transmit the PDCCH on all beams, and the terminal device can monitor the PDCCH across all the beams.

Optionally, if the second satellite network does not obtain the beam measurement result from the first satellite network, the second satellite network cannot determine one or more suitable beams. Therefore, the second satellite network can only transmit the PDCCH on all the beams. The terminal device may monitor the PDCCH on appropriate beams. For example, the terminal device may perform beam selection according to a reference signal received power (RSRP). As another example, the terminal device may select a beam corresponding to an optimal RSRP during the DL synchronization.

Optionally, SRs are associated with SSBs, and the network transmits a scheduling request configuration (generated by the second satellite network and included in the first handover command) to the terminal device. For example, SR resources and SSBs are in one-to-one correspondence. The terminal device selects an appropriate SSB beam based on the beam quality, and then the terminal device transmits a scheduling request associated with the selected SSB to the second satellite network. The second satellite network may determine the SSB selected by the terminal device through association between the SSBs and the SRs, and transmit the dynamic grant to the terminal device using a corresponding beam. The terminal device may release the SR configuration after the handover.

In some embodiments, the first resource may include a pre-configured resource and a dynamically scheduled resource. That is, the terminal device may perform the uplink retransmission through the pre-configured resource, or may perform uplink retransmission through the dynamically scheduled resource.

In some embodiments, the first resource may be a continuous time-frequency resource, time-frequency resources set at a certain time interval, or time-frequency resource with variable time intervals, which is not limited herein.

The first information may indicate the first resource to the terminal device through a plurality of parameters, so that the terminal device can determine the time-frequency resource for the initial uplink transmission and/or the uplink retransmission. In some embodiments, the first information may explicitly indicate time domain information and frequency domain information of the resource, so as to facilitate transmission or monitoring by the terminal device. In some embodiments, the first information may be related to resource configuration in the first handover command. For example, in the RACH-less handover, information of the pre-allocated grant in the first handover command may be related to the first information. As another example, in the RACH-less handover, dynamic scheduling information in the first handover command may be related to the first information.

In some embodiments, the first information may include one or more of following parameters: a first duration corresponding to the pre-configured resource for the satellite handover, a second duration for triggering uplink retransmission in the satellite handover, a third duration corresponding to the dynamically scheduled resource for the satellite handover, and a first offset value corresponding to the second satellite network.

Optionally, the first offset value may be configured to delay the uplink grant corresponding to the pre-configured resource. The first offset value may be a specific offset value of the coverage area of the second satellite network. For example, the first offset value may be a specific K_{offset} of the coverage area of the second satellite network. This specific K_{offset} may be configured to delay a pre-allocated uplink grant.

Optionally, the pre-configured resource for the satellite handover refers to a resource reserved by the second satellite network for the satellite handover. In such a scenario, the first duration may be configured for indicating a time period of the reserved resource. For example, a termination position of the first duration indicates that there is no configured reserved resource subsequently, and the terminal device can only carry out uplink retransmission through the dynamically scheduled resource.

As one example, the first duration may be determined according to the first offset value. The first duration may include a time period corresponding to the first offset value, or may not include a time period corresponding to the first offset value. For example, the first duration may include the time period corresponding to the first offset value and a time period corresponding to the pre-configured resource. That is, in the first duration, a time period before the initial uplink transmission of the terminal device is taken into account. An interval between a time point at which the terminal device receives the first handover command and a time point at which the terminal device is able to transmit an initial PUSCH is typically a sum of a handover interruption time plus the K_{offset} specific to the cell. As another example, the first duration may not include the time period corresponding to the first offset value, but may only be configured to indicate the time period corresponding to the reserved resource.

Optionally, the second duration for triggering the uplink retransmission refers to a time period for the terminal device to determine a retransmission opportunity. For example, at a termination position of the second duration, the terminal device triggers an uplink retransmission.

Optionally, the dynamically scheduled resource for the satellite handover refers to a dynamic grant configured by the second satellite network for the terminal device to carry out access. In such a scenario, the third duration may be configured for the terminal device to determine when the PDCCH for indicating the dynamic grant may be detected.

Exemplarily, the first duration may be longer than the second duration, so that the terminal device can carry out the uplink retransmission using the pre-configured resource. In this scenario, the terminal device may trigger the uplink retransmission within a time period corresponding to the reserved resource.

As one example, a plurality of second durations may be included in the first duration. For example, the second satellite network configures a plurality of available uplink grants within the first duration. A respective second duration of the plurality of second durations may occur at a corresponding available configured grant occasion and an uplink retransmission is triggered at the end of the respective second duration.

For example, the first duration may be equal to the second duration, and the pre-configured resource is not configured for uplink retransmission. However, when the uplink retransmission is the HARQ retransmission, the terminal device may autonomously perform the HARQ retransmission after transmitting the initial uplink transmission.

Exemplarily, the third duration may be longer than the first duration, so that the terminal device can determine timing of detecting the PDCCH. In this scenario, the terminal device may use the dynamically scheduled resource to carry out the uplink retransmission.

In order to facilitate the terminal device to determine the first resource configured or scheduled by the second satellite network, the terminal device may configure one or more timers according to parameters in the first information. Exemplarily, the terminal device may determine the first resource for the uplink retransmission by configuring timers related to a plurality of time parameters. For example, after receiving the handover command, the terminal device may distinguish whether the uplink retransmission is performed through the reserved resource or the dynamically scheduled resource by starting different timers.

Exemplarily, the terminal device may start at least one timer of the plurality of timers for determining the first resource according to the first information. The plurality of timers includes a first timer corresponding to the first duration, a second timer corresponding to the second duration, and a third timer corresponding to the third duration.

On condition that the first timer and the second timer are configured, when the first handover command is received, the terminal device may start the first timer and/or the second timer. That is, the terminal device may start the first timer and the second timer concurrently, or may sequentially start the first timer and the second timer at a certain time interval.

As an example, on condition that the first duration is longer than the second duration, after receiving the first handover command, the terminal device starts the first timer and the second timer. Before expiration of the second timer, the terminal device may perform the initial uplink transmission or other handover-related uplink transmission based on the pre-configured resource. Within a time period after the second timer expires and before the first timer expires, the terminal device performs the uplink retransmission based on the pre-configured resource.

On condition that the above three timers are configured, when the first handover command is received, the terminal device may start the three timers concurrently or sequentially start the three timers. Starting the three timers concurrently makes it easy to configure and monitor all the timers.

As an example, on condition that the first duration is longer than the second duration and the third duration is longer than the first duration, after receiving the first handover command, the terminal device starts the first timer, the second timer, and the third timer concurrently. Before expiration of the second timer, the terminal device may perform the initial uplink transmission or other handover-related uplink transmission based on the pre-configured resource. Within a time period after the second timer expires and before the first timer expires, the terminal device performs the uplink retransmission based on the pre-configured resource. Within a time period after the first timer expires and before the third timer expires, the terminal device detects downlink control information for indicating the dynamically scheduled resource by the second satellite network to perform uplink retransmission.

As an example, in a case where the first timer and the second timer are started and the first duration is longer than the second duration, the second timer may be started multiple times to effectively utilize discontinuous reserved resources for uplink retransmission. For example, when the transport block has multiple transmission occasions in the configurated grant corresponding to the first timer, the second timer may be started at each of the transmission occasions until the first timer expires.

In a case where the first timer is configured, when the first handover command is received, the terminal device may start the first timer. After transmitting the initial uplink transmission, if the first timer has not expired, the terminal device may carry out autonomous retransmission based on the pre-configured resource. The autonomous retransmission before the expiration of the first timer is, for example, a HARQ retransmission.

In order to facilitate configuration or scheduling of the first resource by the second satellite network, the second satellite network may also start one or more timers according to the configured parameters. Exemplarily, the second satellite network may start a corresponding timer after transmitting the handover command, so as to facilitate receiving the initial uplink transmission or uplink retransmission transmitted by the terminal device. For example, the second satellite network may determine a time period corresponding to the reserved resource according to the timer, and thus determine a timing for receiving the initial uplink transmission. As another example, the second satellite network may determine a timing for transmitting the PDCCH according to the timer, and determine a timing for receiving the uplink retransmission according to the dynamic grant of the DCI.

Exemplarily, the second satellite network may start a fourth timer. The fourth timer may be related to at least one of the first duration, the second duration, and the third duration. Through the fourth timer, the second satellite network may detect the initial uplink transmission or the uplink retransmission transmitted by the terminal device.

In order to facilitate understanding, the following describes the RACH-less handover as an example of the handover modes, and a plurality of possible implementations of determining the first resource based on the timers will be described with reference to FIGS. 6 and 7.

In some embodiments, the terminal device or the network-side device may configure a new grant timer configured to support the RACH-less handover command, that is, the first timer described above. The first timer may be "HO-GrantTimer". The reserved resource may be used within a time period corresponding to the first timer.

In some embodiments, the terminal device or the network-side device may define a retransmission timer "HO-RetransmissionTimer", which is the second timer described above, for the pre-allocated uplink grant in the RACH-less handover. As described above, a duration corresponding to the timer "HO-GrantTimer timer" may be longer than or equal to a duration corresponding to the timer "HO-RetransmissionTimer".

In some embodiments, the terminal device or the network-side device may further define a handover timer "HO-Timer", which is the third timer described above, for the RACH-less handover. The third timer is configured to define a time period for the satellite handover, and thus, a duration of the third timer is typically longer than the duration of the first timer and the duration of the second timer.

As an example, on condition that two timers are configured and the first duration is longer than the second duration, after receiving the first handover command, the terminal device may start the first timer and the second timer. The first timer and the second timer may be started concurrently, or may be started successively at a certain time interval.

In order to facilitate understanding, the following describes starting the timers by the terminal device as an example of starting the timers, and a possible implementation of determining the first resource based on the timers will be illustratively described with reference to FIG. 6. Referring to FIG. 6, the first timer and the second timer are concurrently started at time T0. An interval between time T0 and time T2 is the first duration of the first timer, and an interval between time T0 and time T1 is the second duration of the second timer. That is, the second timer expires at time T1, and the first timer expires at time T2.

When the terminal device receives the first handover command at time T0, the first timer and the second timer are started. The terminal device begins to prepare for initial uplink transmission. As previously described, the specific K_{offset} of the second satellite network is configured to delay the pre-allocated uplink grant. Therefore, the interval between the time point at which the terminal device receives the handover command and the time point at which the terminal device is able to transmit the PUSCH should be the sum of the handover interruption time plus the K_{offset} specific to the cell.

Since the first duration is longer than the second duration, the first timer has not expired when the second timer expires. During the time period from time T1 to time T2, if the second satellite network does not receive the initial uplink transmission and does not transmit feedback to the terminal device, the terminal device may perform an uplink retransmission. That is, when the grant timer configured for the initial transmission of data in the RACH-less handover has not expired, the terminal device performs autonomous retransmission for the initial uplink transmission. Even if there is no network scheduled retransmission, the terminal device may perform the retransmission based on the grant timer.

As an example, when three timers are configured and the third duration is longer than the first duration and the first duration is longer than the second duration, after receiving the first handover command, the terminal device may start the first timer, the second timer, and the third timer concurrently.

In order to facilitate understanding, the following describes starting the timers by the terminal device as an example of starting the timers, and another possible implementation of determining the first resource based on the timers will be illustratively described with reference to FIG. 7. Referring to FIG. 7, the first timer, the second timer, and the third timer are concurrently started at time T0. An interval between time T0 to time T2 is the first duration of the first timer, an interval between time T0 to time T1 is the second duration of the second timer, and an interval between time T0 to time T3 is the third duration of the third timer. That is, the second timer expires at time T1, the first timer expires at time T2, and the third timer expires at time T3.

When the terminal device receives the first handover command at time T0, three timers are started concurrently. The terminal device begins to prepare for initial uplink transmission. As described above, the specific K_{offset} of the second satellite network should be configured to delay the pre-allocated uplink grant. Therefore, the interval between the time point at which the terminal device receives the handover command and the time point at which the terminal device is able to transmit the PUSCH should be the sum of the handover interruption time plus the K_{offset} specific to the cell.

Since the first duration is longer than the second duration, the first timer has not expired when the second timer expires. Within the duration corresponding to the second timer, an autonomous retransmission is triggered using the configured grant. After the second timer expires (during the time period from time T1 to time T2), if the second satellite network fails to receive the initial uplink transmission and does not transmit feedback to the terminal device, the terminal device performs an autonomous retransmission or initiates a retransmission at a next available configured grant occasion. The second timer may be started at each transmission occasion of the transport block in the configured grant until the first timer expires. In this case, the resources for the autonomous retransmission are all pre-authorized.

After the first timer expires (during the time period from time T2 to time T3), PUSCH transmission require dynamic resources. The terminal device needs to detect the PDCCH transmitted by the second satellite network. Dynamic resources are determined by detecting the DCI. According to the scheduling of the DCI, the terminal device transmits a PUSCH retransmission. Therefore, the terminal device needs to detect the DCI (PDCCH) within the time period from time T2 to time T3 and perform retransmission.

A method in which the terminal device determines the resource for the uplink retransmission based on the first information in the first handover command and various possible implementations thereof are described above with reference to FIGS. 5 to 7. In order to facilitate understanding, the interaction between the communication devices in the method will be described below with reference to FIG. 8 by taking the RACH-less handover as an example. The method shown in FIG. 8 is described based on interaction between the terminal device, the first satellite network, and the second satellite network.

Referring to FIG. 8, at S810, the terminal device transmits a measurement report to a network device corresponding to the first satellite network. The first satellite network may determine a second satellite network satisfying the RACH-less handover based on the measurement report.

At S820, the first satellite network transmits a first handover request to the second satellite network. The first handover request is configured for the second satellite network to determine information of the terminal device and to configure uplink resources for the RACH-less handover for the terminal device. The uplink resources may include reserved resources for the initial uplink transmission, or may include information related to reserved resources or dynamically scheduled resources for uplink retransmission.

At S830, the second satellite network transmits a request acknowledgement to the first satellite network. The request acknowledgement (handover response) is acknowledgement information corresponding to the first handover request. Typically, the request acknowledgement includes uplink grant information based on the RACH-less handover and the plurality of durations described above, so as to facilitate the determination of a first handover command by the first satellite network.

At S840, the first satellite network transmits the first handover command including first information to the terminal device. The first handover command is a RACH-less handover command.

In some embodiments, when the terminal device receives the first information, it indicates that the satellite handover supports retransmission. However, in a scenario where the delay in the NTN is relatively large, if the uplink retransmission is enabled, there may be a situation where the quality of service (QoS) may not be ensured. For example, in the case of starting HARQ, the terminal device needs to monitor the channel and wait for the retransmission to complete. As another example, in the case of having HARQ feedback, transmission of the HARQ feedback may affect the delay, resulting in failing to maintain QoS and high throughput.

In order to solve this problem, the uplink retransmission can be enabled or disabled according to a communication situation in the satellite handover procedure, so that the second satellite network can determine whether to enable the retransmission according to the resource situation or the actual communication situation.

In some embodiments, the terminal device may determine whether to enable retransmission according to the first information. That is, the first information is further configured to indicate whether to enable or disable the uplink retransmission in the satellite handover procedure. Alternatively, HARQ retransmission may be enabled or disabled in the RACH-less handover procedure. Optionally, the uplink HARQ retransmission is enabled or disabled in the satellite handover procedure, thereby reducing the transmission delay and improving the transmission efficiency according to the transmission environment.

The foregoing describes how the terminal device establishes a connection with the second satellite network through reserved resources and/or the first resources after receiving the first handover command. Taking the RACH-less handover as an example, when the network confirms that the RACH-less handover is completed, the network may not transmit the media access control control element (MAC CE) carrying the contention resolution identifier of the terminal device, but transmit the PDCCH/PDSCH addressed to the cell-radio network temporary identifier (C-RNTI).

In some embodiments, the pre-allocated uplink grant may be released when the RACH-less handover has been completed. That is, the pre-allocated uplink grant is released regardless of whether the handover is successful.

In some embodiments, when the RACH-less handover has been completed, whether the pre-allocated uplink resources are released depends on a network implementation. For example, the uplink resources may be reserved by the terminal device until the handover is successful or the network side explicitly releases the resources. For example, in various scenarios such as variable radio propagation conditions, congestion of the second satellite network, synchronization failure, or expiration of validity timer, the terminal device may not be able to access the target cell using the RACH-less handover. In this case, the terminal device may require a fallback solution. As another example, regardless of the NTN deployment, after the RACH-less handover fails, the second satellite network is likely to still be available, i.e., the coverage range of the cell has not been changed and has a valid terminal device context. In this way, the terminal device can continue to initiate the access request.

As mentioned earlier, there are many ways/modes to perform satellite handover. The CHO is a handover process introduced by 3GPP for 5G in release 16 (R16). The CHO allows the terminal device to decide whether to handover after certain conditions are met. Unlike the handover mode in which the network (e.g., gNB) is responsible for the final decision on whether to handover, in CHO, whether to handover is determined autonomously by the terminal device. CHO configuration may also be referred to as conditional reconfiguration.

Exemplarily, in the CHO, link between handover preparation and execution may be eliminated by introducing a conditional process. For example, handover preparation is completed before disconnection from the first satellite network, while access to the second satellite network is completed later.

Exemplarily, in the CHO, the terminal device may pre-set a set of potential candidate satellite networks. The terminal device may implement handover by receiving an appropriate handover command transmitted by each candidate satellite network. Unlike conventional handover, the handover command is not performed at the time of the handover command being received. The handover command may be stored in the terminal device and executed only when a specific condition is satisfied. For example, the handover command cannot be executed when a link quality with a candidate satellite network is lower than a specified threshold, so that the possibility that the handover cannot be executed due to the degradation of channel conditions can be avoided, which helps to reduce the possibility of failure of the wireless link.

Therefore, compared with the conventional handover mode, in the CHO, the handover command can be stored in the device and can be executed under certain conditions, thereby improving the access success rate. In order to better reduce handover delay and improve access success rate, how to integrate the RACH-less handover with the CHO is a technical problem that needs to be solved.

In order to perform the satellite handover more efficiently, it may be determined whether to perform the RACH-less handover or the CHO based on a variety of circumstances before the handover. That is, when there is configuration information of a plurality of handover modes, the communication device in the satellite handover may decide whether to perform the RACH-less handover or whether to perform the CHO.

In some embodiments, the first handover command may include configuration information and trigger conditions corresponding to the plurality of handover modes to facilitate decisions by different communication devices. For example, CHO-related configuration information may be provided to the terminal device by the first satellite network. As another example, CHO-related trigger conditions may be provided by one or more candidate satellite networks.

In some embodiments, configuration information of the plurality of handover modes may also be used as trigger conditions for each other. That is, the plurality of handover modes can be combined with each other to improve handover efficiency while satisfying actual use conditions.

Exemplarily, the RACH-less handover and the CHO may be combined as a handover mode to complete the satellite handover. For example, CHO-related trigger conditions may include configuration information related to the RACH-less handover. Configuration of the RACH-less handover can be used as a condition of the CHO-related trigger conditions. Therefore, the handover command corresponding to the CHO may include the uplink grant information based on the RACH-less handover and/or the duration of each of at least one of the three timers described above. As another example, the CHO may be configured for triggering of the RACH-less handover. That is, when the condition for the CHO is satisfied, the RACH-less handover may be triggered.

Exemplarily, the trigger condition of the CHO may also be a time-based condition.

For example, if the terminal device is able to support a plurality of handover modes, the handover mode of the satellite handover may be determined according to the actual transmission situation. As described above, the decision on the handover modes may be executed by the terminal device, or may be executed by the first satellite network, or may be executed by the second satellite network.

In order to facilitate understanding, a method of decision on the handover modes by a plurality of communication devices will be described in an exemplary manner with reference to FIGS. 9 to 11.

In some embodiments, it may be decided by the first satellite network whether the satellite handover adopts the RACH-less handover or the CHO or a handover of a combination of the RACH-less handover and the CHO. Exemplarily, the first satellite network may make a decision on the handover modes based on the measurement report of the terminal device.

For example, the first satellite network may decide the handover mode when making a handover decision, or may make a decision on the handover modes before transmitting the first handover command to the terminal device. A decision result of the first satellite network may be transmitted to the terminal device through third information. The third information may be configured to indicate the decision result, or may directly indicate configuration information of the handover mode.

Exemplarily, if the terminal device is able to support both handover modes, the first satellite network may transmit a handover request message to one or more candidate satellite networks to determine second information for decision-making. A handover request acknowledge message transmitted by the candidate satellite network to the first satellite network may include candidate configuration information of a plurality of handover modes such as the RACH-less handover and the CHO handover. That is, the second information may include configuration information related to the RACH-less handover of the one or more candidate satellite networks, and configuration information and trigger conditions associated with the CHO of the one or more candidate satellite networks.

Exemplarily, the second information may further include priorities of the plurality of handover modes set by the one or more candidate satellite networks. After receiving the priorities, the first satellite network may decide whether to perform the RACH-less handover or the CHO or a handover of a combination of the RACH-less handover and the CHO. The priorities of the handover modes can be set or dynamically adjusted.

For example, when the first satellite network determines through a decision that the RACH-less handover will be performed to the second satellite network, the first satellite network transmits a message "RRCReconfiguration" or a dedicated RACH-less handover request to the terminal device. After receiving the information from the first satellite network, the terminal device initiates the RACH-less handover to the second satellite network.

Exemplarily, the first satellite network may make a decision on the handover modes based on a measurement report of the terminal device. As an example, the first satellite network may set a measurement threshold corresponding to the RSRP for each of the RACH-less handover and the CHO, and determine a handover mode according to RSRP measurement results of target base stations by the terminal device. For example, when a measurement result of a target base station reaches a specific measurement threshold, the first satellite network will request a corresponding handover mode from the target base station. The first satellite network may also notify the terminal device of which handover mode to adopt according to the measurement result of the terminal device.

In order to facilitate understanding, determining a handover mode when making the handover decision by the first satellite network is taken as an example, and exemplary description will be made with reference to FIG. 9. FIG. 9 is also described based on interaction between the terminal device, the first satellite network, and the second satellite network. As can be seen from FIG. 9, the first satellite network determines by decision that the satellite handover adopts the RACH-less handover.

Referring to FIG. 9, at S910, the terminal device transmits the measurement control and report to the first satellite network. The measurement report message may include measurement results of one or more neighboring second satellite networks around the terminal device detected by the terminal device. The terminal device may generate the measurement report according to a measurement configuration in a received measurement control message and/or measurement control information, and transmit the measurement report to the first satellite network.

At S920, the first satellite network makes a handover decision based on the measurement report. In this process, the first satellite network further determines a second satellite network and determines whether to perform the RACH-less handover or the CHO or handover of a combination of the RACH-less handover and the CHO.

At S930, the first satellite network transmits a handover request to the second satellite network. The first satellite network may transmit a handover request message to the second satellite network according to the measurement result.

At S940, the second satellite network transmits a handover request acknowledgement to the first satellite network. The second satellite network may configure and reserve required resources (e.g., C-RNTI and/or grant of resource configuration) and transmit a handover request acknowledgement message to the first satellite network. The handover request acknowledgement is, for example, an ACK message. The handover request ACK message may include information of resources reserved and prepared for handover. For example, the handover request ACK message may include bearer signaling that is to be transmitted to the terminal device as an RRC message for performing handover. The signaling may include a new C-RNTI, a security algorithm identifier of the second satellite network for the selected security algorithm, and may include some other parameters, such as access parameters, SIB. If the RACH-less handover is configured, the signaling may include a timing adjustment indication and an optional pre-allocated uplink grant. The handover request ACK message may also include information for forwarding the radio network layer (RNL) or the transport network layer (TNL), if desired.

At S950, the first satellite network transmits RACH-less handover configuration to the terminal device.

At S960, the terminal device transmits an initial uplink transmission to the second satellite network.

At S970, the second satellite network transmits a RACH-less handover acknowledgement to the terminal device.

In some embodiments, it may be decided by the terminal device whether the satellite handover adopts the RACH-less handover or the CHO or a handover of a combination of the RACH-less handover and the CHO.

Exemplarily, the terminal device may decide, according to the second information in the first handover command, whether the satellite handover adopts the RACH-less handover or the CHO or a handover of a combination of the RACH-less handover and the CHO from among the plurality of handover modes. The second information may include, as previously described, one or more pieces of following information: priorities of different handover modes in the one or more candidate satellite networks, configuration information related to the RACH-less handover of the one or more candidate satellite networks, and configuration information and trigger conditions related to the CHO of the one or more candidate satellite networks.

As an example, the terminal device may also determine the handover mode according to a current traffic/service level. For example, if the current service level of the terminal device is higher than the first threshold, the RACH-less handover is preferentially selected as the satellite handover. For another example, if the current service level of the terminal device is equal to or lower than the first threshold, the satellite handover adopts the CHO.

Exemplarily, the terminal device may determine, according to the third information in the first handover command, whether the satellite handover adopts the RACH-less handover or the CHO or a handover of a combination of the RACH-less handover and the CHO. The third information is configured to indicate a result of a decision made by the first satellite network or the second satellite network on the plurality of handover modes. That is, after the first satellite network or the second satellite network makes a decision on the handover modes, the terminal device is directly informed of the decision result.

As an embodiment, if the terminal device is able to support a plurality of handover modes, the first satellite network may transmit a handover request message to each of one or more candidate satellite networks to determine the second information, which will not be described herein. After receiving the configuration information, the first satellite network may transmit a first handover command to the terminal device. The first handover command may be carried in a message "RRCReconfiguration" of the RRC layer. The first handover command may include uplink grant information based on the RACH-less handover, a duration of each of at least one of the three timers described above, and a CHO configuration and a trigger condition of the second satellite network. After receiving the information of the first satellite network, the terminal device may make a decision on the handover modes. For example, the terminal device may determine the handover mode based on the second information. As another example, the terminal device may flexibly select the handover mode based on the second information and a current service situation.

Optionally, if the current service level of the terminal device is relatively high, the terminal device may preferentially select the RACH-less handover to facilitate seamless access to the second satellite network and ensure service continuity. Alternatively, the CHO selected by the terminal device may be triggered by the RACH-less handover.

Optionally, if the current service level of the terminal device is relatively high, the terminal device may select the CHO (such as time-based handover), wait for the service to end and the handover condition to be met, and then initiate the CHO.

Optionally, if the current service level of the terminal device is relatively low, the terminal device can only perform the CHO or the CHO based on the time condition.

In order to facilitate understanding, making a decision on the handover modes by the terminal device will be described below with reference to FIG. 10. As can be seen from FIG. 10, the terminal device determines through decision-making that the satellite handover adopts the RACH-less handover. For the sake of brevity, same operations in FIG. 10 and FIG. 9 will not be described in detail.

Compared with operations at S920 in FIG. 9, operations at S1020 in FIG. 10 are used only for making a handover decision, and does not determine a handover mode.

Referring to FIG. 10, at S1050, the first satellite network transmits a handover command to the terminal device. The handover command may include configurations of the plurality of handover modes (in operations at S950, the first satellite network transmits the RACH-less handover configuration to the terminal device). For example, the first satellite network may transmit CHO configuration to the terminal device. The CHO configuration may include CHO configurations for a plurality of candidate satellite networks, specifically relating to handover conditions of the candidate satellite networks, handover commands of the candidate satellite networks, RRC reconfiguration parameters for handover to the candidate satellite networks, and resource information reserved for handover to the candidate satellite networks.

At S1060, after receiving the handover command including configuration information of the plurality of handover modes, the terminal device determines that the handover mode adopts the RACH-less handover. For example, the terminal device can evaluate conditions for handover to the plurality of candidate satellite networks, and select a second satellite network for handover from among the plurality of candidate satellite networks and determine a handover mode. For example, the terminal device may conduct measurements on the plurality of candidate satellite networks, and determine whether there is a target satellite network among the plurality of candidate satellite networks meet a handover condition according to the measurement result of each of the plurality of candidate satellite networks. If the terminal device recognizes that the second satellite network satisfies the handover condition, the terminal device is able to select the second satellite network as a target for handover.

At S1070, the terminal device transmits an initial uplink transmission. When the RACH-less handover is configured, the terminal device may transmit a handover completion message to the second satellite network. The terminal device may successfully access the second satellite network after receiving the uplink grant. The terminal device may transmit the handover completion message including the C-RNTI to the second satellite network to confirm the handover, and transmit an uplink buffer status report to the second satellite network, thereby indicating that the handover procedure of the terminal device is completed.

In some embodiments, it may be decided by the second satellite network whether the satellite handover adopts the RACH-less handover or the CHO or a handover of a combination of the RACH-less handover and the CHO.

Exemplarily, the second satellite network may make a decision on the handover modes according to a resource usage situation. The resource usage situation can refer to a situation of resources already occupied by the communication service currently provided by the second satellite network, or refer to a situation of remaining resources of the second satellite network while maintaining all current communication services, which is not limited herein.

As one embodiment, if the terminal device is able to support multiple handover modes, the first satellite network may transmit a handover request message to each of one or more candidate satellite networks. The handover request message may include a RACH-less handover request, or a CHO handover request. The second satellite network may be any one of the one or more candidate satellite networks. The second satellite network may determine the handover mode according to a current resource usage situation. As an example, the second satellite network may make a decision based on whether it has available resources to reserve. If there are no reservable resources, the second satellite network only transmits the CHO configuration and the trigger conditions. If there are reservable resources, the handover response message transmitted by the second satellite network to the first satellite network may include uplink grant information based on the RACH-less handover and/or a duration of each of at least one of the three timers described above.

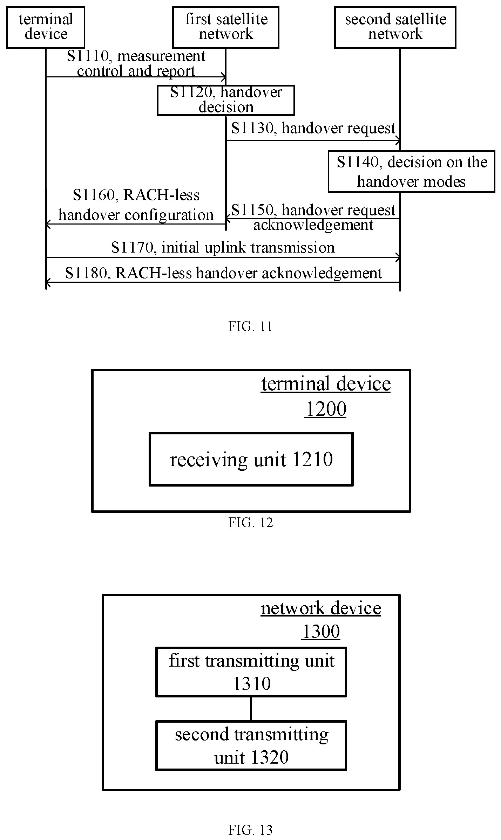

In order to facilitate understanding, determining the handover mode by the second satellite network is taken as an example and illustrated with reference to FIG. 11. Referring to FIG. 11, the second satellite network determines by decision that the satellite handover adopts the RACH-less handover. For the sake of brevity, same operations in FIG. 11 and FIG. 9 will not be described in detail.

Compared with operations at S920 of FIG. 9, operations at S1120 in FIG. 11 are used only for making a handover decision, and does not determine a handover mode.

Referring to FIG. 11, at S1130, the first satellite network transmits a handover request message to the second satellite network, and the second satellite network may select the handover mode based on information included in the handover request message. The handover request message may include the RACH-less handover and the CHO handover. However, the handover request in operations at S930 may include only the handover request on the RACH-less handover decided by the first satellite network.

At S1140, after receiving the handover request, the second satellite network decides that the handover mode adopts the RACH-less handover. The first satellite network receives a decision result through a handover request acknowledgement in operations at S1150, and transmits a RACH-less handover configuration to the terminal device in operations at S1160.

Embodiments of the method of the present disclosure have been described in detail above with reference to FIGS. 1 to 11. Hereinafter, embodiments of the device of the present disclosure will be described in detail with reference to FIGS. 12 to 15. It shall be understood that the description of the embodiments related to the device and the description of the embodiments related to the method correspond to each other, and therefore, for the the portions not described in detail, reference may be made to the previous embodiments of the method.

FIG. 12 is a schematic block diagram of a terminal device according to embodiments of the present disclosure. The terminal device 1200 may be any one of the terminal devices described above. The terminal device 1200 illustrated in FIG. 12 includes a receiving unit 1210.

The receiving unit 1210 may be configured to receive a first handover command, where the first handover command is configured to instruct the terminal device to perform satellite handover from a coverage area of the first satellite network to a coverage area of the second satellite network. The first handover command includes first information. The first information is configured for the terminal device to determine a first resource for an uplink transmission to a second satellite network in a satellite handover procedure. The satellite handover adopts a RACH-less handover and/or a CHO.

Optionally, the first resource includes a pre-configured resource and/or a dynamically scheduled resource for handover.

Optionally, the first information includes one or more of the following parameters: a first duration corresponding to a pre-configured resource for the satellite handover, a second duration for triggering an uplink retransmission in the satellite handover, a third duration corresponding to the dynamically scheduled resource for the satellite handover, and a first offset value corresponding to the second satellite network.

Optionally, the terminal device 1200 further includes a timing unit. The timing unit is configured to start at least one timer of a plurality of timers for determining the first resource according to the first information. The plurality of timers include a first timer corresponding to the first duration, a second timer corresponding to the second duration, and a third timer corresponding to the third duration.

Optionally, the first duration is longer than the second duration, and the timing unit is configured to start the first timer and the second timer after receiving the first handover command. The terminal device 1200 further includes a first processing unit. The first processing unit is configured to perform an uplink retransmission based on the pre-configured resource within a time period after the second timer expires and before the first timer expires.

Optionally, the first duration is longer than the second duration, the third duration is longer than the first duration, and the timing unit is configured to concurrently start the first timer, the second timer, and the third timer after receiving the first handover command. The terminal device 1200 further includes a second processing unit. The second processing unit is configured to perform uplink retransmission based on the pre-configured resource within a time period after the second timer expires and before the first timer expires. The terminal device 1200 further includes a detecting unit. The detecting unit is configured to detect downlink control information of the second satellite network for indicating dynamically scheduled resources, within a time period after the first timer expires and before the third timer expires, so as to perform uplink retransmission.

Optionally, the timing unit is configured to start a first timer. The terminal device 1200 further includes a third processing unit. The third processing unit is configured to perform a HARQ retransmission based on the pre-configured resource within a time period after transmitting an initial uplink transmission to the second satellite network and before the first timer expires.

Optionally, the first duration is determined according to a first offset value, and the first offset value is configured to delay an uplink grant corresponding to the pre-configured resource.

Optionally, the first information is further configured to indicate whether to enable or disable uplink HARQ retransmission in the satellite handover procedure.

Optionally, the terminal device further includes a determining unit. The determining unit is configured to determine, according to second information in the first handover command, whether the satellite handover adopts the RACH-less handover or the CHO or a handover of a combination of the RACH-less handover and the CHO from among a plurality of handover modes. Alternatively, the determining unit is configured to determine, according to third information in the first handover command, whether the satellite handover adopts the RACH-less handover or the CHO or the handover of the combination of the RACH-less handover and the CHO. The third information is configured to indicate a result of a decision made by the first satellite network or the second satellite network among the plurality of handover modes.

Optionally, the second satellite network is one of one or more candidate satellite networks, and the second information includes one or more pieces of following information: priorities of different handover modes in the one or more candidate satellite networks, configuration information related to the RACH-less handover of the one or more candidate satellite networks, and configuration information and trigger conditions related to the CHO of the one or more candidate satellite networks.

Optionally, the handover of the combination of the RACH-less handover and the CHO includes that a trigger condition related to the CHO includes configuration information related to the RACH-less handover, or the CHO is configured for triggering the RACH-less handover.

Optionally, the satellite handover is related to a current service level of the terminal device. The determining unit is further configured to preferentially select the RACH-less handover as the satellite handover if the current service level of the terminal device is higher than a first threshold. Alternatively, the determining unit is further configured to select the CHO as the satellite handover if the current service level of the terminal device is equal to or lower than the first threshold.

FIG. 13 is a schematic block diagram of a network device according to embodiments of the present disclosure. The network device 1300 may be any of the network devices corresponding to the first satellite network described above. The network device 1300 illustrated in FIG. 13 includes a first transmitting unit 1310 and a second transmitting unit 1320.

The first transmitting unit 1310 is configured to transmit a first handover request to a second satellite network.

The second transmitting unit 1320 is configured to transmit a first handover command to the terminal device according to a request acknowledgement corresponding to the first handover request. The first handover command is configured to instruct the terminal device to perform satellite handover from a coverage area of the first satellite network to a coverage area of the second satellite network. The first handover command includes first information. The first information is configured for the terminal device to determine a first resource for uplink transmission to the second satellite network in the satellite handover procedure. The satellite handover adopts the RACH-less handover and/or the CHO.

Optionally, the first resource includes a pre-configured resource and/or a dynamically scheduled resource for handover.

Optionally, the first information includes one or more of following parameters: a first duration corresponding to the pre-configured resource for the satellite handover, a second duration for triggering uplink retransmission in the satellite handover, a third duration corresponding to the dynamically scheduled resource for the satellite handover, and a first offset value corresponding to the second satellite network.

Optionally, the first duration is determined according to a first offset value, and the first offset value is configured to delay an uplink grant corresponding to the pre-configured resource.

Optionally, the first information is further configured to indicate whether to enable or disable uplink HARQ retransmission in the satellite handover procedure.

Optionally, before transmitting the handover request to the second satellite network, the network device 1300 further includes a determining unit, and the determining unit is configured to determine, according to a measurement report of the terminal device, whether the satellite handover adopts the RACH-less handover or the CHO or the handover of the combination of the RACH-less handover and the CHO among the plurality of handover modes.

Optionally, the second satellite network is one of one or more candidate satellite networks. The network device 1300 further includes a third transmitting unit. The third transmitting unit is configured to transmit a handover request to each of the one or more candidate satellite networks to determine second information. The second information includes one or more pieces of following information: priorities of different handover modes in the one or more candidate satellite networks, configuration information related to the RACH-less handover of the one or more candidate satellite networks, and configuration information and trigger conditions related to the CHO of the one or more candidate satellite networks.

Alternatively, the handover of the combination of the RACH-less handover and the CHO includes that a trigger condition related to the CHO includes configuration information related to the RACH-less handover, or the CHO is configured for triggering the RACH-less handover.

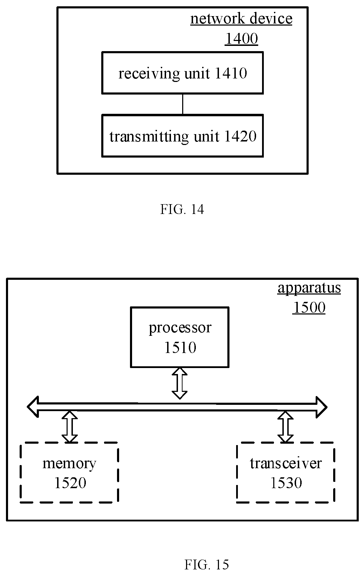

FIG. 14 is a schematic block diagram of another network device according to an embodiment of the present disclosure. The network device 1400 may be any of the network devices corresponding to the second satellite network described above. The network device 1400 illustrated in FIG. 14 includes a receiving unit 1410 and a transmitting unit 1420.

The receiving unit 1410 may be configured to receive a first handover request transmitted by a first satellite network.

The transmitting unit 1420 may be configured to transmit a request acknowledgement corresponding to the first handover request to the first satellite network. The request acknowledgement is configured to determine a first handover command. The first handover command is configured to instruct the terminal device to perform satellite handover from a coverage area of the first satellite network to a coverage area of the second satellite network. The first handover command includes first information. The first information is configured for the terminal device to determine a first resource for an uplink transmission to the second satellite network in the satellite handover procedure. The satellite handover adopts the RACH-less handover and/or the CHO.

Optionally, the first resource includes a pre-configured resource and/or a dynamically scheduled resource for handover.

Optionally, the first information includes one or more of following parameters: a first duration corresponding to the pre-configured resource for the satellite handover, a second duration for triggering an uplink retransmission in the satellite handover, a third duration corresponding to the dynamically scheduled resource for the satellite handover, and a first offset value corresponding to the second satellite network.

Optionally, the network device 1400 further includes a timing unit. The timing unit is configured to start a fourth timer. The fourth timer is related to at least one of the first duration, the second duration, and the third duration. The network device 1400 further includes a detecting unit. The detecting unit is configured to detect an initial uplink transmission or an uplink retransmission transmitted by the terminal device according to the fourth timer.

Optionally, the first duration is determined according to the first offset value, and the first offset value is configured to delay an uplink grant corresponding to the pre-configured resource.

Optionally, the first information is further configured to indicate whether to enable or disable uplink HARQ retransmission in the satellite handover procedure.

Optionally, after receiving the first handover request transmitted by the first satellite network, the network device 1400 further includes a determining unit. The determining unit is configured to determine, according to a resource usage situation, whether the satellite handover adopts the RACH-less handover, or the CHO, or a handover of a combination of the RACH-less handover and the CHO, among the plurality of handover modes.

Optionally, the transmitting unit 1420 is further configured to transmit to the first satellite network one or more pieces of following information: priorities of different handover modes, configuration information related to the RACH-less handover, and configuration information and trigger conditions related to the CHO.

Alternatively, the handover of the combination of the RACH-less handover and the CHO includes that a trigger condition related to the CHO includes configuration information related to the RACH-less handover, or the CHO is configured for triggering the RACH-less handover.

FIG. 15 is a schematic configuration diagram of a communication apparatus according to an embodiment of the present disclosure. The dashed line in FIG. 15 indicates that the unit or module is optional. The apparatus 1500 may be configured to implement the methods described in the method embodiments described above. The apparatus 1500 may be a chip, a terminal device, or a network device.

The apparatus 1500 may include one or more processors 1510. The processor 1510 may support the apparatus 1500 to implement the methods described in the previous method embodiments. The processor 1510 may be a general-purpose processor or a special-purpose processor. For example, the processor may be a central processing unit (CPU). Alternatively, the processor may also be another general-purpose processor, a digital signal processor (DSP), an application specific integrated circuit (ASIC), a field programmable gate array (FPGA) or other programmable logic device, a discrete gate or transistor logic device, a discrete hardware component, or the like. The general-purpose processor may be a microprocessor or the processor may be any conventional processor or the like.

The apparatus 1500 may further include one or more memories 1520. The memory 1520 has stored a program that can be executed by the processor 1510 to cause the processor 1510 to perform the method described in the above method embodiments. The memory 1520 may be independent of the processor 1510 or may be integrated in the processor 1510.

The apparatus 1500 may further include a transceiver 1530. The processor 1510 may communicate with other devices or chips through the transceiver 1530. For example, the processor 1510 may transmit and receive data with other devices or chips through the transceiver 1530.

Embodiments of the present disclosure further provide a computer-readable storage medium for storing a program. The computer-readable storage medium can be applied to a terminal device or a network device provided in an embodiment of the present disclosure. The program causes a computer to execute a method executed by the terminal device or the network device in various embodiments of the present disclosure.

The computer-readable storage medium may be any available medium that can be read by a computer or a data storage device such as a server, a data center, or the like that contains one or more available media integrations. The available medium may be a magnetic medium (e.g., floppy disk, hard disk, magnetic tape), an optical medium (e.g., digital video disc (DVD)), or a semiconductor medium (e.g., solid state disk (SSD)), etc.

Embodiments of the present disclosure further provide a computer program product. The computer program product includes a program. The computer program product can be applied to a terminal device or a network device provided in an embodiment of the present disclosure. The program causes a computer to execute a method executed by the terminal or the network device in various embodiments of the present disclosure.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general-purpose computer, a special purpose computer, a computer network, or other programmable devices. The computer instructions may be stored in a computer readable storage medium or transferred from one computer readable storage medium to another computer readable storage medium. The computer instructions may be transmitted from one website site, computer, server or data center to another website site, computer, server or data center by wired (e.g. coaxial cable, fiber optic, digital subscriber line (DSL)) or wireless (e.g. infrared, wireless, microwave, etc.) means.

Embodiments of the present disclosure further provide a computer program. The computer program can be applied to the terminal device or the network device provided by the embodiments of the present disclosure, and the computer program causes the computer to execute the method executed by the terminal device or the network device in the respective embodiments of the present disclosure.

The terms "system" and "network" may be used interchangeably in the disclosure. In addition, the terminology used in the present disclosure is for explanation of specific embodiments of the present disclosure only, and is not intended to limit the present disclosure. The terms "first," "second," "third," and "fourth," etc. in the specification and claims of the present disclosure and the accompanying drawings are used to distinguish different objects, and are not used to describe a specific order. Furthermore, the terms "comprising/including" and "having" and any variations thereof are intended to cover non-exclusive inclusions.

In the embodiments of the present disclosure, the "indication/instruct" mentioned may be a direct indication, an indirect indication, or an associated relationship. For example, A indicates B, which may mean that A directly indicates B, for example, B can be acquired by A; may also mean that A indicates B indirectly, for example A indicates C, and B can be acquired through C; or may also indicate that there is an association relationship between A and B.

In an embodiment of the present disclosure, the term "correspondence/corresponding" may indicate that there is a direct correspondence or indirect correspondence between the two, may indicate that there is a correlation relationship between the two, or may indicate a relationship between indicating and being instructed, configuring and being configured, or the like.

In the embodiment of the present disclosure, "predefined/predefining/predefinition" or "preconfigured" may be realized by storing corresponding codes, tables, or other methods that can be used to indicate relevant information in a device (including, for example, a terminal device and a network device) in advance, and the present disclosure does not limit the specific implementation method thereof. For example, predefinition may refer to defined in the protocol.

In the embodiments of the present disclosure, the "protocol" may refer to a standard protocol in the field of communication, and may include, for example, an LTE protocol, an NR protocol, and related protocols applied to future communication systems, and the present disclosure does not limit this.

In embodiments of the present disclosure, determining B according to A does not mean that B is determined from A alone, but B may also be determined from A and/or other information.

The term "and/or" in the embodiments of the present disclosure is only an association relationship describing an association object, and indicates that there may be three kinds of relationships, for example, A and/or B, which may indicate that A exists alone, A and B exist simultaneously, and B exists alone. In addition, the character "/" in this article generally indicates that the related objects before and after are in an "or" relationship.

In the embodiments of the present disclosure, the size of the sequence numbers of the above-described processes does not mean the sequence of execution, and the sequence of execution of each process should be determined by its function and internal logic, and should not constitute any limitation on the implementation process of the embodiments of the present disclosure.

In several embodiments provided herein, it shall be understood that the disclosed systems, apparatuses/devices, and methods may be implemented in other ways. For example, the device embodiments described above are merely schematic, for example, the division of units is only one logical function division, and there may be other division methods in actual implementation. For example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in various embodiments of the present disclosure may be integrated in one processing unit, each unit may be physically present alone, or two or more units may be integrated in one unit.

The above is merely a specific embodiment of the present disclosure, but the scope of protection of the present disclosure is not limited thereto, and any person skilled in the art can easily think of changes or substitutions within the technical scope disclosed in the present disclosure, and should be covered within the scope of protection of the present disclosure. Therefore, the scope of protection of the present disclosure should be based on the scope of protection of the claims.

## Claims

1. A method for satellite handover of non-terrestrial networks, applied to satellite handover from a coverage area of a first satellite network to a coverage area of a second satellite network, the method comprising:
receiving a first handover command, wherein the first handover command includes first information, and the first information is configured for the terminal device to determine a first resource for an uplink transmission to the second satellite network during the satellite handover, wherein the satellite handover adopts a random access channel-less (RACH-less) handover and/or a conditional handover (CHO).

2. The method of claim 1, wherein the first resource includes a pre-configured resource and/or dynamically scheduled resource for handover.

3. The method of claim 1 or 2, wherein the first information includes one or more of following parameters:
a first duration corresponding to a pre-configured resource for the satellite handover;
a second duration configured for triggering an uplink retransmission in the satellite handover;
a third duration corresponding to a dynamically scheduled resource for the satellite handover; and
a first offset value corresponding to the second satellite network.

4. The method of claim 3, further comprising:
starting at least one timer of a plurality of timers for determining the first resource according to the first information, wherein the plurality of timers include a first timer corresponding to the first duration, a second timer corresponding to the second duration, and a third timer corresponding to the third duration.

5. The method of claim 4, wherein the first duration is longer than the second duration, and the method further comprises:
after receiving the first handover command,
starting the first timer and the second timer; and
performing the uplink retransmission based on the pre-configured resource within a time period after the second timer expires and before the first timer expires.

6. The method of claim 4, wherein the first duration is longer than the second duration and the third duration is longer than the first duration, wherein the method further comprises:
after receiving the first handover command,
starting the first timer, the second timer, and the third timer concurrently;
performing an uplink retransmission based on the pre-configured resource within a time period after the second timer expires and before the first timer expires; and
detecting downlink control information of the second satellite network for indicating the dynamically scheduled resource for performing the uplink retransmission within a time period after the first timer expires and before the third timer expires.

7. The method of claim 4, further comprising:
starting the first timer; and
performing a hybrid automatic repeat request (HARQ) retransmission based on the pre-configured resource within a time period after transmitting an initial uplink transmission to the second satellite network and before the first timer expires.

8. The method of any one of claims 3 to 7, wherein the first duration is determined according to the first offset value, and the first offset value is configured to delay an uplink grant corresponding to the pre-configured resource.

9. The method of any one of claims 1 to 8, wherein the first information is further configured to indicate whether to enable or disable an uplink HARQ retransmission during the satellite handover.

10. The method of any one of claims 1 to 9, further comprising:
determining, according to second information in the first handover command, whether the satellite handover adopts the RACH-less handover, the CHO, or a handover of a combination of the RACH-less handover and the CHO among a plurality of handover modes; or
determining, according to third information in the first handover command, whether the satellite handover adopts the RACH-less handover, the CHO, or the handover of the combination of the RACH-less handover and the CHO, wherein the third information is configured to indicate a result of a decision made by the first satellite network or the second satellite network among the plurality of handover modes.

11. The method of claim 10, wherein the second satellite network is one of at least one candidate satellite network, wherein the second information includes one or more pieces of following information:
priorities of different handover modes in the at least one candidate satellite network;
configuration information related to the RACH-less handover of the at least one candidate satellite network; and
configuration information and trigger conditions related to the CHO of the at least one candidate satellite network.

12. The method of claim 11, wherein the handover of the combination of the RACH-less handover and the CHO includes that a trigger condition related to the CHO includes configuration information related to the RACH-less handover, or the CHO is configured for triggering the RACH-less handover.

13. The method of any one of claims 10 to 12, wherein the satellite handover is related to a current service level of the terminal device, wherein the method further comprises:
selecting the RACH-less handover as the satellite handover preferentially, in response to the current service level of the terminal device being higher than a first threshold; and
determining the CHO as the satellite handover, in response to the current service level of the terminal device being equal to or lower than the first threshold.

14. A method for satellite handover of non-terrestrial networks, applied to satellite handover from a coverage area of a first satellite network to a coverage area of a second satellite network, the method comprising:
transmitting a first handover request to the second satellite network; and
transmitting a first handover command to a terminal device according to a request acknowledgement corresponding to the first handover request, wherein the first handover command includes first information, and the first information is configured for the terminal device to determine a first resource for an uplink transmission to the second satellite network during the satellite handover, wherein the satellite handover adopts a random access channel-less (RACH-less) handover and/or a conditional handover (CHO).

15. The method of claim 14, wherein the first resource includes a pre-configured resource and/or dynamically scheduled resource for handover.

16. The method of claim 14 or claim 15, wherein the first information includes one or more of following parameters:
a first duration corresponding to a pre-configured resource for the satellite handover;
a second duration configured for triggering an uplink retransmission in the satellite handover;
a third duration corresponding to a dynamically scheduled resource for the satellite handover; and
a first offset value corresponding to the second satellite network.

17. The method of claim 16, wherein the first duration is determined according to the first offset value, and the first offset value is configured to delay an uplink grant corresponding to the pre-configured resource.

18. The method of any one of claims 14 to 17, wherein the first information is further configured to indicate whether to enable or disable an uplink hybrid automatic repeat request (HARQ) retransmission during the satellite handover.

19. The method of any one of claims 14 to 18, wherein the method further comprises:
before transmitting the first handover request to the second satellite network,
determining, according to a measurement report of the terminal device, whether the satellite handover adopts the RACH-less handover, the CHO, or a handover of a combination of the RACH-less handover and the CHO among a plurality of handover modes.

20. The method of claim 19, wherein the second satellite network is one of at least one candidate satellite network, the method further comprising:
transmitting a handover request to each of the at least one candidate satellite network, to determine second information;
wherein the second information includes one or more pieces of following information:
priorities of different handover modes in the at least one candidate satellite network;
configuration information related to the RACH-less handover of the at least one candidate satellite network; and
configuration information and trigger conditions related to the CHO of the at least one candidate satellite network.

21. The method of claim 20, wherein the handover of the combination of the RACH-less handover and the CHO includes that a trigger condition related to the CHO includes configuration information related to the RACH-less handover, or the CHO is configured for triggering the RACH-less handover.

22. A method for satellite handover of non-terrestrial networks, applied to satellite handover from a coverage area of a first satellite network to a coverage area of a second satellite network, the method comprising:
receiving a first handover request transmitted by the first satellite network;
transmitting a request acknowledgement corresponding to the first handover request to the first satellite network, wherein the request acknowledgement is configured to determine a first handover command, the first handover command includes first information, and the first information is configured for the terminal device to determine a first resource for an uplink transmission to the second satellite network during the satellite handover, wherein the satellite handover adopts a random access channel-free (RACH-less) handover and/or a conditional handover (CHO).

23. The method of claim 22, wherein the first resource includes a pre-configured resource and/or dynamically scheduled resource for handover.

24. The method of claim 22 or claim 23, wherein the first information includes one or more of following parameters:
a first duration corresponding to a pre-configured resource for the satellite handover;
a second duration configured for triggering an uplink retransmission in the satellite handover;
a third duration corresponding to a dynamically scheduled resource for the satellite handover; and
a first offset value corresponding to the second satellite network.

25. The method of claim 24, further comprising:
starting a fourth timer, wherein the fourth timer is associated with at least one of the first duration, the second duration, and the third duration; and
detect an initial uplink transmission or the uplink retransmission transmitted by the terminal device according to the fourth timer.

26. The method of claim 24 or claim 25, wherein the first duration is determined according to the first offset value, and the first offset value is configured to delay an uplink grant corresponding to the pre-configured resource.

27. The method of any one of claims 22 to 26, wherein the first information is further configured to indicate whether to enable or disable an uplink hybrid automatic repeat request (HARQ) retransmission during the satellite handover.

28. The method of any one of claims 22 to 27, wherein the method further comprises:
after receiving the first handover request transmitted by the first satellite network,
determining, according to a resource usage situation, whether the satellite handover adopts the RACH-less handover, the CHO, or a handover of a combination of the RACH-less handover and the CHO among a plurality of handover modes.

29. The method of claim 28, further comprising:
transmitting to the first satellite network one or more pieces of following information:
priorities of different handover modes;
configuration information related to the RACH-less handover; and
configuration information and trigger conditions related to the CHO.

30. The method of claim 29, wherein the handover of the combination of the RACH-less handover and the CHO includes that a trigger condition related to the CHO includes configuration information related to the RACH-less handover, or the CHO is configured for triggering the RACH-less handover.

31. A terminal device, comprising:
a receiving unit configured to receive a first handover command;
wherein the first handover command is configured to instruct the terminal device to perform satellite handover from a coverage area of a first satellite network to a coverage area of a second satellite network, wherein the first handover command includes first information, wherein the first information is configured for the terminal device to determine a first resource for an uplink transmission to the second satellite network during the satellite handover, wherein the satellite handover adopts a random access channel-less (RACH-less) handover and/or a conditional handover (CHO).

32. The terminal device of claim 31, wherein the first resource includes a pre-configured resource and/or dynamically scheduled resource for handover.

33. The terminal device of claim 31 or claim 32, wherein the first information includes one or more of following parameters:
a first duration corresponding to a pre-configured resource for the satellite handover;
a second duration for triggering an uplink retransmission in the satellite handover;
a third duration corresponding to a dynamically scheduled resource for the satellite handover; and
a first offset value corresponding to the second satellite network.

34. The terminal device of claim 33, further comprising:
a timing unit configured to start at least one timer of a plurality of timers for determining the first resource according to the first information, wherein the plurality of timers include a first timer corresponding to the first duration, a second timer corresponding to the second duration, and a third timer corresponding to the third duration.

35. The terminal device of claim 34, wherein the first duration is longer than the second duration, and the timing unit is configured to start the first timer and the second timer after receiving the first handover command;
wherein the terminal device further comprises:
a first processing unit configured to perform the uplink retransmission based on the pre-configured resource within a time period after the second timer expires and before the first timer expires.

36. The terminal device of claim 34, wherein the first duration is longer than the second duration, and the third duration is longer than the first duration, wherein the timing unit is configured to start the first timer, the second timer, and the third timer concurrently after receiving the first handover command;
wherein the terminal device further comprises:
a second processing unit configured to perform the uplink retransmission based on the pre-configured resource within a time period after the second timer expires and before the first timer expires; and
a detecting unit configured to detect downlink control information of the second satellite network for indicating the dynamically scheduled resource for performing the uplink retransmission within a time period after the first timer expires and before the third timer expires.

37. The terminal device of claim 34, wherein the timing unit is configured to start the first timer, and the terminal device further comprises:
a third processing unit configured to perform a hybrid automatic repeat request (HARQ) retransmission based on the pre-configured resource within a time period after transmitting an initial uplink transmission to the second satellite network and before the first timer expires.

38. The terminal device of any one of claims 33 to 37, wherein the first duration is determined according to the first offset value, and the first offset value is configured to delay an uplink grant corresponding to the pre-configured resource.

39. The terminal device of any one of claims 31 to 38, wherein the first information is further configured to indicate whether to enable or disable an uplink HARQ retransmission during the satellite handover.

40. The terminal device of any one of claims 31 to 39, further comprising a determining unit configured to:
determine, according to second information in the first handover command, whether the satellite handover adopts the RACH-less handover, the CHO, or a handover of a combination of the RACH-less handover and the CHO among a plurality of handover modes; or
determine, according to third information in the first handover command, whether the satellite handover adopts the RACH-less handover, the CHO, or a handover of a combination of the RACH-less handover and the CHO, wherein the third information is configured to indicate a result of a decision made by the first satellite network or the second satellite network among the plurality of handover modes.

41. The terminal device of claim 40, wherein the second satellite network is one of at least one candidate satellite network, and the second information includes one or more pieces of following information:
priorities of different handover modes in the at least one candidate satellite network;
configuration information related to the RACH-less handover of the at least one candidate satellite network; and
configuration information and trigger conditions related to the CHO of the at least one candidate satellite network.

42. The terminal device of claim 41, wherein the handover of the combination of the RACH-less handover and the CHO includes that a trigger condition related to the CHO includes configuration information related to the RACH-less handover, or the CHO is configured for triggering the RACH-less handover.

43. The terminal device of any one of claims 40 to 42, wherein the satellite handover is related to a current service level of the terminal device, and the determining unit is further configured to:
select the RACH-less handover as the satellite handover preferentially, in response to the current service level of the terminal device being higher than a first threshold; and
determine the CHO as the satellite handover, in response to the current service level of the terminal device being equal to or lower than the first threshold.

44. A network device, wherein the network device is a network device corresponding to a first satellite network, the network device comprising:
a first transmitting unit configured to transmit a first handover request to a second satellite network; and
a second transmitting unit, configured to transmit a first handover command to a terminal device according to a request acknowledgement corresponding to the first handover request, wherein the first handover command is configured to instruct the terminal device to perform satellite handover from a coverage area of the first satellite network to a coverage area of a second satellite network, wherein the first handover command includes first information, the first information is configured for the terminal device to determine a first resource for an uplink transmission to the second satellite network during the satellite handover, wherein the satellite handover adopts a random access channel-less (RACH-less) handover and/or a conditional handover (CHO).

45. The network device of claim 44, wherein the first resource comprises a pre-configured resource and/or dynamically scheduled resource for handover.

46. The network device of claim 44 or claim 45, wherein the first information includes one or more of following parameters:
a first duration corresponding to a pre-configured resource for the satellite handover;
a second duration configured for triggering an uplink retransmission in the satellite handover;
a third duration corresponding to a dynamically scheduled resource for the satellite handover; and
a first offset value corresponding to the second satellite network.

47. The network device of claim 46, wherein the first duration is determined according to the first offset value, and the first offset value is configured to delay an uplink grant corresponding to the pre-configured resource.

48. The network device of any one of claims 44 to 47, wherein the first information is further configured to indicate whether to enable or disable an uplink hybrid automatic repeat request (HARQ) retransmission during the satellite handover.

49. The network device of any one of claims 44 to 48, wherein prior to transmitting the first handover request to the second satellite network, the network device further comprises:
a determining unit configured to determine, according to a measurement report of the terminal device, whether the satellite handover adopts the RACH-less handover, the CHO, or a handover of a combination of the RACH-less handover and the CHO among a plurality of handover modes.

50. The network device of claim 49, wherein the second satellite network is one of at least one candidate satellite network, the network device further comprising:
a third transmitting unit configured to transmit a handover request to each of the at least one candidate satellite network to determine second information;
wherein the second information includes one or more pieces of following information:
priorities of different handover modes in the at least one candidate satellite network;
configuration information related to the RACH-less handover of the at least one candidate satellite network; and
configuration information and trigger conditions related to the CHO of the at least one candidate satellite network.

51. The network device of claim 50, wherein the handover of the combination of the RACH-less handover and the CHO includes that a trigger condition related to the CHO includes configuration information related to the RACH-less handover, or the CHO is configured for triggering the RACH-less handover.

52. A network device, wherein the network device is a network device corresponding to a second satellite network, the network device comprising:
a receiving unit configured to receive a first handover request transmitted by a first satellite network; and
a transmitting unit configured to transmit, to the first satellite network, a request acknowledgement corresponding to the first handover request, wherein the request acknowledgement is configured to determine a first handover command, the first handover command is configured to instruct a terminal device to perform satellite handover from a coverage area of the first satellite network to a coverage area of the second satellite network, and the first handover command includes first information, wherein the first information is configured for the terminal device to determine a first resource for an uplink transmission to the second satellite network during the satellite handover, wherein the satellite handover adopts a random access channel-free (RACH-less) handover and/or a conditional handover (CHO).

53. The network device of claim 52, wherein the first resource includes a pre-configured resource and/or dynamically scheduled resource for handover.

54. The network device of claim 52 or 53, wherein the first information includes one or more of following parameters:
a first duration corresponding to a pre-configured resource for the satellite handover;
a second duration configured for triggering an uplink retransmission in the satellite handover;
a third duration corresponding to a dynamically scheduled resource for the satellite handover; and
a first offset value corresponding to the second satellite network.

55. The network device of claim 54, further comprising:
a timing unit configured to start a fourth timer, wherein the fourth timer is associated with at least one of the first duration, the second duration, and the third duration; and
a detecting unit configured to detect an initial uplink transmission or the uplink retransmission transmitted by the terminal device according to the fourth timer.

56. The network device of claim 54 or claim 55, wherein the first duration is determined according to the first offset value, and the first offset value is configured to delay an uplink grant corresponding to the pre-configured resource.

57. The network device of any one of claims 52 to 56, wherein the first information is further configured to indicate whether to enable or disable an uplink hybrid automatic repeat request (HARQ) retransmission during the satellite handover.

58. The network device of any one of claims 52 to 57, wherein after receiving the first handover request transmitted by the first satellite network, the network device further comprises:
a determining unit configured to determine, according to a resource usage situation, whether the satellite handover adopts the RACH-less handover, the CHO, or a handover of a combination of the RACH-less handover and the CHO among a plurality of handover modes.

59. The network device of claim 58, wherein the transmitting unit is further configured to transmit to the first satellite network one or more of following information:
priorities of different handover modes;
configuration information related to the RACH-less handover; and
configuration information and trigger conditions related to the CHO.

60. The network device of claim 59, wherein the handover of the combination of the RACH-less handover and the CHO includes that a trigger condition related to the CHO includes configuration information related to the RACH-less handover, or the CHO is configured for triggering the RACH-less handover.

61. A communication apparatus, comprising at least one memory for storing programs and at least one processor for invoking the programs in the at least one memory to perform the method of any one of claims 1 to 30.

62. An apparatus, comprising a processor for invoking a program from a memory to perform the method of any one of claims 1 to 30.

63. A chip, comprising a processor for invoking a program from a memory, to enable a device on which the chip is mounted to perform the method of any one of claims 1 to 30.

64. A computer-readable storage medium, having stored thereon a program that causes a computer to perform the method of any one of claims 1 to 30.

65. A computer program product, comprising a program that causes a computer to perform the method of any one of claims 1 to 30.

66. A computer program, causing a computer to perform the method of any one of claims 1 to 30.
